# EUROPEAN PATENT APPLICATION

(11) **EP 4 646 006 A1**
(43) Date of publication of application: **05.11.2025**
(21) Application number: 24756028.7
(22) Date of filing: 02.02.2024
(51) Int. Cl.: H04W 74/08

(54) **COMMUNICATION METHOD AND RELATED APPARATUS**

(30) Priority: 13.02.2023 CN 202310138198
(71) Applicant: Huawei Technologies Co., Ltd., Shenzhen, Guangdong 518129 (CN)
(72) Inventor: YUAN, Shitong, Shenzhen, Guangdong 518129 (CN)
(74) Representative: Grünecker Patent- und Rechtsanwälte PartG mbB
(86) International application number: PCT/CN2024/075464
(87) International publication number: WO 2024/169654

(57) **Abstract**

Embodiments of this application disclose a communication method and a related apparatus, so that a terminal device can determine an access status of random access while reducing a service interruption time of the terminal device in a serving cell. The method in embodiments of this application includes: A terminal device sends a random access request to a neighboring-cell network device, where the random access request is used to initiate random access to a target neighboring cell, where the target neighboring cell is a neighboring cell of a serving cell of the terminal device. The terminal device retransmits the random access request to the neighboring-cell network device if the terminal device does not receive a feedback message from a serving network device for the random access request, or the terminal device receives at least one of the following from the serving network device: a first feedback message or first scheduling signaling, where the first feedback message indicates that the random access of the terminal device fails, and the first scheduling signaling is used to schedule the terminal device to retransmit the random access request.

## Description

This application claims priority to Chinese Patent Application No. 202310138198.9, filed with the China National Intellectual Property Administration on February 13, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

When a terminal device performs cell handover, the terminal device cannot receive data or information from a serving cell. As a result, a service of the serving cell of the terminal device is interrupted. To reduce a service interruption time of the terminal device in the serving cell, it is agreed in a standard that before the terminal device performs cell handover, the terminal device obtains in advance an uplink timing advance (timing advance, TA) of the terminal device in a candidate cell to which the terminal device is to hand over. Specifically, the terminal device is located in the serving cell, and the terminal device may initiate random access to the candidate cell. A specific random access procedure includes: The terminal device sends a preamble to the candidate cell. Then, the terminal device waits to receive a response message from the candidate cell for the preamble, where the response message includes a TA of the terminal device in the candidate cell.

However, in the random access procedure, the terminal device cannot continue to communicate with the serving cell. Therefore, the service of the serving cell is interrupted. To further reduce a service interruption time of the terminal device in the serving cell, the following solution is proposed: After sending the preamble, the terminal device does not need to wait to receive the response message from the candidate cell. The serving cell may obtain the TA of the candidate cell from the candidate cell, and send the TA to the terminal device by using a handover command.

However, if the terminal device does not wait to receive the response message from the candidate cell for the preamble, the terminal device cannot determine whether random access of the terminal device succeeds. Therefore, how the terminal device determines an access status of the random access while reducing the service interruption time of the terminal device in the serving cell is an urgent problem to be resolved.

### SUMMARY

This application provides a communication method and a related apparatus, so that a terminal device determines, based on a feedback status of a serving network device, whether random access initiated by the terminal device to a target neighboring cell succeeds. In this way, the terminal device can determine an access status of the random access while reducing a service interruption time of the terminal device in a serving cell.

A first aspect of this application provides a communication method, including:

A terminal device sends a random access request to a neighboring-cell network device, where the random access request is used to initiate random access to a target neighboring cell, and the target neighboring cell is a neighboring cell of a serving cell of the terminal device. The terminal device retransmits the random access request to the neighboring-cell network device if the terminal device does not receive a feedback message from a serving network device for the random access request, or the terminal device receives at least one of the following from the serving network device: a first feedback message or first scheduling signaling, where the first feedback message indicates that the random access of the terminal device fails, and the first scheduling signaling is used to schedule the terminal device to retransmit the random access request.

It can be learned from the foregoing technical solution that the terminal device does not need to wait for a response from the neighboring-cell network device for the random access request, but waits for the feedback message of the serving network device for the random access request, thereby helping reduce a service interruption time of the terminal device in the serving cell. Further, if the terminal device does not receive the feedback message from the serving network device for the random access request, or the terminal device receives at least one of the following from the serving network device: the first feedback message or the first scheduling signaling, the terminal device may retransmit the random access request to the neighboring-cell network device. In this way, the terminal device may determine, based on a feedback status of the serving network device, whether the random access succeeds. Therefore, in the technical solution of this application, the terminal device can determine an access status of the random access while reducing the service interruption time of the terminal device in the serving cell.

Based on the first aspect, in a possible implementation, the method further includes: The terminal device determines that the random access of the terminal device succeeds if the terminal device receives a second feedback message from the serving network device, and the second feedback message indicates that the neighboring-cell network device successfully receives the random access request.

In this implementation, the terminal device may receive the second feedback message from the neighboring-cell network device, to determine that the random access of the terminal device succeeds. The terminal device does not need to wait for a response from the neighboring-cell network device for the random access request, but waits for the feedback message of the serving network device for the random access request, thereby helping reduce a service interruption time of the terminal device in the serving cell. Therefore, in the technical solution of this application, the terminal device can determine an access status of the random access while reducing the service interruption time of the terminal device in the serving cell.

Based on the first aspect, in a possible implementation, the method further includes: The terminal device determines that the random access of the terminal device succeeds if the terminal device receives first indication information from the serving network device, where the first indication information indicates the terminal device not to retransmit the random access request to the neighboring-cell network device. In this implementation, the terminal device may indirectly determine, based on the first indication information, that the random access succeeds. The terminal device does not need to wait for a response from the neighboring-cell network device for the random access request, but waits for the feedback message of the serving network device for the random access request. In this way, the terminal device can determine an access status of the random access while reducing a service interruption time of the terminal device in the serving cell.

Based on the first aspect, in a possible implementation, the second feedback message further includes at least one of the following: a TA of the target neighboring cell, an identifier allocated by the target neighboring cell to the terminal device, or an uplink resource allocated by the target neighboring cell to the terminal device. This helps the terminal device communicate with the target neighboring cell. Before the terminal device hands over to the target neighboring cell, the neighboring-cell network device allocates a corresponding identifier, uplink resource, and TA to the terminal device. Therefore, before handing over to the target neighboring cell, the terminal device obtains the information shown above in advance, thereby reducing a service interruption time of the terminal device in the serving cell during cell handover.

Based on the first aspect, in a possible implementation, that the terminal device retransmits the random access request to the neighboring-cell network device includes: The terminal device retransmits the random access request to the neighboring-cell network device based on a preconfigured quantity of retransmission times and/or a preconfigured power ramping parameter.

In this implementation, the terminal device may increase, based on the preconfigured power ramping parameter, power for sending the random access request, and retransmit the random access request based on the quantity of retransmission times. This helps improve an access success probability of random access, and prevents continuous random access failures caused by insufficient transmit power or poor channel state, thereby improving access efficiency of random access, and avoiding a resource waste.

Based on the first aspect, in a possible implementation, the first feedback message or the first scheduling signaling further includes a power ramping parameter; and that the terminal device retransmits the random access request to the neighboring-cell network device includes: The terminal device retransmits the random access request to the neighboring-cell network device based on the power ramping parameter.

In this implementation, the first feedback message or the second scheduling signaling further includes the power ramping parameter, so that the terminal device can increase, based on the power ramping parameter, power for sending the random access request. This helps improve an access success probability of random access, and prevents continuous random access failures caused by insufficient transmit power, thereby improving access efficiency of random access, and avoiding a resource waste.

Based on the first aspect, in a possible implementation, the method further includes: The terminal device receives a handover command from the serving network device, where the handover command indicates the terminal device to hand over to the target neighboring cell. This helps the terminal device hand over to the target neighboring cell. It should be noted that this implementation may alternatively be used as an independent solution, and is not dependent on the foregoing implementations.

Based on the first aspect, in a possible implementation, after the terminal device receives the handover command from the serving network device, the method further includes: The terminal device determines at least one of the following: an uplink resource, an uplink transmit beam, uplink transmit power, or a TA of the target neighboring cell, where the uplink resource is used by the terminal device to perform uplink transmission with the target neighboring cell, the uplink transmit beam is a beam used by the terminal device to perform uplink sending with the target neighboring cell, the uplink transmit power is power used by the terminal device to perform uplink sending with the target neighboring cell, and the TA of the target neighboring cell is a TA used by the terminal device to send an uplink signal to the target neighboring cell. In this implementation, the terminal device may determine at least one of the foregoing information, so that the terminal device can communicate with the neighboring-cell network device.

Based on the first aspect, in a possible implementation, that the terminal device determines the uplink resource includes: The terminal device uses a preconfigured dedicated physical uplink control channel (physical uplink control channel, PUCCH) resource or a preconfigured configured grant physical shared channel (configured grant physical uplink shared channel, CG-PUSCH) resource as the uplink resource; or the terminal device determines the uplink resource by using a handover command, where the handover command includes the uplink resource; or the terminal device monitors, on a preconfigured time-frequency resource, second scheduling signaling sent by the neighboring-cell network device, where the second scheduling signaling indicates the uplink resource. In this implementation, several possible implementations in which the terminal device determines the uplink resource are shown, thereby enriching implementations of the solution.

Based on the first aspect, in a possible implementation, that the terminal device determines the uplink transmit power includes: The terminal device determines a path loss between the neighboring-cell network device and the terminal device based on a first path loss reference signal; and the terminal device determines the uplink transmit power based on the path loss. In this implementation, a possible implementation in which the terminal device determines the uplink transmit power is shown, thereby facilitating implementation of the solution.

Based on the first aspect, in a possible implementation, that the terminal device determines the uplink transmit power includes: The terminal device uses transmit power for sending the random access request by the terminal device as the uplink transmit power. Another implementation in which the terminal device determines the uplink transmit power is shown, so that the terminal device can communicate with the neighboring-cell network device.

Based on the first aspect, in a possible implementation, if the handover command further includes an activated transmission configuration indicator (transmission configuration indicator, TCI) state of the target neighboring cell, the first path loss reference signal is a path loss reference signal associated with the activated TCI state; or if the handover command further includes a deactivated TCI state of the target neighboring cell, the first path loss reference signal is a physical broadcast channel block (synchronization signal and physical broadcast channel block, SSB) associated with a random access resource used by the terminal device to send the random access request; or if the handover command further includes a reference signal of the target neighboring cell, the first path loss reference signal is the reference signal of the target neighboring cell. In this implementation, a plurality of possible implementations in which the terminal device determines the first path loss reference signal are shown, thereby helping the terminal device determine the uplink transmit power.

Based on the first aspect, in a possible implementation, the handover command further includes a power control parameter associated with the activated TCI state of the target neighboring cell or a power control parameter associated with the deactivated TCI state of the target neighboring cell; and that the terminal device determines the uplink transmit power based on the path loss includes: The terminal device determines the uplink transmit power based on the path loss and the power control parameter. In this implementation, the handover command further carries the power control parameter, and the terminal device may determine the uplink transmit power based on the path loss and the power control parameter. This helps the terminal device perform uplink transmission with the serving network device by using appropriate uplink transmit power, and improves communication transmission performance.

Based on the first aspect, in a possible implementation, that the terminal device determines the TA of the target neighboring cell includes: If the handover command includes a TA of the target neighboring cell, the terminal device uses the TA in the handover command as the TA of the target neighboring cell; or if the handover command does not include a TA of the target neighboring cell, the terminal device considers, by default, that the TA of the target neighboring cell is equal to 0; or if the handover command does not include a TA of the target neighboring cell, the terminal device uses the TA carried in the second feedback message as the TA of the target neighboring cell; or if the handover command includes an uplink timing advance indication, and the uplink timing advance indication indicates the terminal device to determine a TA of the target neighboring cell, the terminal device uses the TA of the target neighboring cell determined by the terminal device as the TA of the target neighboring cell; or if the handover command includes a timing advance group identifier (TA group ID, TAG ID), the terminal device uses a TA associated with the TAG ID as the TA of the target neighboring cell; or if the handover command does not include a TA of the target neighboring cell, and the target neighboring cell is a current serving cell of the terminal device, the terminal device uses a TA of the serving cell as the TA of the target neighboring cell. In this implementation, a plurality of possible implementations in which the terminal device determines the TA of the target neighboring cell are shown, thereby helping the terminal device perform uplink transmission with the neighboring-cell network device, and improving communication transmission performance.

Based on the first aspect, in a possible implementation, that the terminal device determines the uplink transmit beam includes: If the handover command includes a TCI state indicated by the neighboring-cell network device for the terminal device, the terminal device determines the uplink transmit beam based on the TCI state indicated in the handover command; or if a TCI state indicated in the handover command is a downlink TCI state, the terminal device determines the uplink transmit beam based on a receive beam of an SSB associated with a random access resource used to send the random access request. In this implementation, a plurality of possible implementations in which the terminal device determines the uplink transmit beam are shown, thereby helping the terminal device perform uplink transmission with the neighboring-cell network device, and improving communication transmission performance.

Based on the first aspect, in a possible implementation, the first scheduling signaling includes second indication information, and the second indication information indicates the terminal device to retransmit the random access request. In this implementation, the second indication information explicitly indicates the terminal device to retransmit the random access request. In this way, the terminal device is notified to retransmit the random access request, so that the terminal device retransmits the random access request by using appropriate transmit power and an appropriate quantity of retransmission times. This improves a success rate of random access of the terminal device.

Based on the first aspect, in a possible implementation, the first scheduling signaling further includes at least one of the following: third indication information or a power ramping parameter, where the third indication information indicates the terminal device whether to increase power for sending the random access request, and the power ramping parameter includes a power ramping value or a power ramping step. In this implementation, the first scheduling signaling further includes the third indication information and/or the power ramping parameter. The terminal device may determine, based on the third indication information, whether to increase the power for sending the random access request, and then increase, based on the power ramping parameter, the power for sending the random access request. This helps improve an access success rate of random access of the terminal device.

Based on the first aspect, in a possible implementation, the method further includes: The terminal device receives fourth indication information from the serving network device, where the fourth indication information indicates the terminal device not to wait for a feedback message from the neighboring-cell network device for the random access request; and the terminal device continues to communicate with the serving network device without waiting for the feedback message from the neighboring-cell network device for the random access request. In this way, whether the terminal device waits for the feedback message from the neighboring cell network is flexibly configured.

Based on the first aspect, in a possible implementation, before the terminal device sends the random access request to the neighboring-cell network device, the method further includes: The terminal device receives third scheduling signaling from the serving network device, where the third scheduling signaling is used to schedule the terminal device to initiate the random access to the target neighboring cell. In this way, the terminal device initiates the random access to the neighboring-cell network device.

Based on the first aspect, in a possible implementation, the third scheduling signaling is carried in DCI, and the DCI further indicates the terminal device to receive a feedback message from the serving network device for the random access request. In this way, the terminal device waits for the feedback message from the serving network device, thereby avoiding service interruption caused by the feedback message from the neighboring-cell network device.

Based on the first aspect, in a possible implementation, the first scheduling signaling includes first resource configuration information, the third scheduling signaling includes second resource configuration information, the first resource configuration information is different from the second resource configuration information, the third scheduling signaling is carried in DCI, and the DCI indicates a PRACH resource; and further, the terminal device may initially transmit the random access request to candidate network device by using the PRACH resource. Based on the difference between the first resource configuration information and the second resource configuration information, the terminal device may determine to initiate initial transmission of random access to the candidate network device, thereby enriching implementations of the solution.

A second aspect of this application provides a communication method, including:
If a serving network device does not receive a feedback message from a neighboring-cell network device for a random access request of a terminal device, or the serving network device receives a third feedback message from the neighboring-cell network device and the third feedback message indicates that the neighboring-cell network device does not receive the random access request, the serving network device sends at least one of the following to the terminal device: a first feedback message, first scheduling signaling, or first indication information; or the serving network device does not send a feedback message to the terminal device, where the first random access request is used by the terminal device to request to access a target neighboring cell, and the target neighboring cell is a neighboring cell of a serving cell of the terminal device; and the first feedback message indicates that random access of the terminal device fails, the first scheduling signaling is used to schedule the terminal device to retransmit the random access request, and the first indication information indicates the terminal device not to retransmit the random access request to the neighboring-cell network device.

It can be learned from the foregoing technical solution that, if the serving network device does not receive the feedback message from the neighboring-cell network device for the random access request of the terminal device, or the serving network device receives the third feedback message from the neighboring-cell network device, the serving network device sends at least one of the following to the terminal device: the first feedback message, the first scheduling signaling, or the first indication information; or the serving network device does not send the feedback message to the terminal device. It can be learned that the serving network device may monitor the feedback message from the neighboring-cell network device for the random access request of the terminal device, and send the corresponding feedback message to the terminal device or does not send the feedback message based on the feedback message. In this way, the terminal device does not need to wait for a response from the neighboring-cell network device for the random access, but waits for the feedback message of the serving network device for the random access request, thereby helping reduce a service interruption time of the terminal device in the serving cell. Therefore, in the technical solution of this application, the terminal device can determine an access status of the random access while reducing the service interruption time of the terminal device in the serving cell.

Based on the second aspect, in a possible implementation, the method further includes: If the serving network device receives a fourth feedback message from the neighboring-cell network device, and the fourth feedback message indicates that the neighboring-cell network device successfully receives the random access request of the terminal device, the serving network device sends a second feedback message to the terminal device, or the serving network device does not send a feedback message to the terminal device, where the second feedback message indicates that random access of the terminal device succeeds.

In this implementation, if the serving network device receives the fourth feedback message from the neighboring-cell network device, the serving network device sends the second feedback message to the terminal device, or the serving network device does not send the feedback message to the terminal device. In this way, the terminal device determines that the random access of the terminal device succeeds. Therefore, the terminal device does not need to wait for a response from the neighboring-cell network device for random access, but waits for the feedback message of the serving network device for the random access request, thereby helping reduce a service interruption time of the terminal device in the serving cell.

Based on the second aspect, in a possible implementation, the second feedback message further includes at least one of the following: a TA of the target neighboring cell, an identifier allocated by the target neighboring cell to the terminal device, or an uplink resource allocated by the target neighboring cell to the terminal device.

In this implementation, for a case in which the random access of the terminal device succeeds, the second feedback message may further include at least one of the foregoing information. Therefore, when the terminal device hands over to the target neighboring cell, the terminal device can communicate with the neighboring-cell network device. In addition, before handing over to the target neighboring cell, the terminal device obtains the information shown above in advance, thereby reducing a service interruption time of the terminal device in the serving cell during cell handover of the terminal device.

Based on the second aspect, in a possible implementation, before the method, the method further includes: The serving network device sends third scheduling signaling to the terminal device, where the third scheduling signaling is used to schedule the terminal device to initiate the random access to the target neighboring cell. In this way, the terminal device initiates the random access to the neighboring-cell network device.

Based on the second aspect, in a possible implementation, the first scheduling signaling includes first resource configuration information, and the first resource configuration information is used by the terminal device to retransmit the random access request; the third scheduling signaling includes second resource configuration information, and the second resource configuration information is used by the terminal device to initially transmit the random access request; and the first resource configuration information is the same as the second resource configuration information. In this implementation, the first scheduling signaling and the third scheduling signaling include the same resource configuration information, to indirectly or implicitly indicate the terminal device to retransmit the random access request, thereby reducing indication overheads.

Based on the second aspect, in a possible implementation, the first scheduling signaling includes second indication information, and the second indication information indicates the terminal device to retransmit the random access request. In this implementation, the serving network device explicitly indicates, by using the second indication information, the terminal device to retransmit the random access request, so that the terminal device retransmits the random access request.

Based on the second aspect, in a possible implementation, the first scheduling signaling further includes at least one of the following: third indication information or a power ramping parameter, where the third indication information indicates the terminal device whether to increase power for sending the random access request, and the power ramping parameter includes a power ramping value or a power ramping step.

In this implementation, the first scheduling signaling may further include the third indication information and/or the power ramping parameter. Therefore, the terminal device retransmits the random access request based on the third indication information and/or the power ramping parameter by using appropriate transmit power. This helps improve a success rate of random access of the terminal device.

Based on the second aspect, in a possible implementation, the method further includes: The serving network device sends a handover command to the terminal device, where the handover command indicates the terminal device to hand over to the target neighboring cell. In this way, the terminal device initiates the random access to the target neighboring cell. It should be noted that this implementation may alternatively be used as an independent solution, and is not dependent on the foregoing implementations.

Based on the second aspect, in a possible implementation, the handover command further includes a TA of the target neighboring cell, and the TA of the target neighboring cell is a TA used by the terminal device to send an uplink signal to the target neighboring cell. Therefore, before handing over to the target neighboring cell, the terminal device obtains the TA of the target neighboring cell in advance, thereby reducing a service interruption time of the terminal device in the serving cell during cell handover of the terminal device.

Based on the first aspect, in a possible implementation, the handover command further includes an identifier of a PUCCH resource used by the terminal device to perform uplink communication with the target neighboring cell. Therefore, after handing over to the target neighboring cell, the terminal device may perform uplink transmission with the target neighboring cell by using the PUCCH resource.

Based on the second aspect, in a possible implementation, the method further includes: The serving network device sends fourth indication information to the terminal device, where the fourth indication information indicates the terminal device not to wait for a feedback message from the neighboring-cell network device for the random access request. In this way, whether the terminal device waits for the feedback message from the neighboring-cell network device for the random access request is flexibly configured by the neighboring-cell network device.

Based on the second aspect, in a possible implementation, the third feedback message specifically indicates that the random access initiated by the terminal device to the target neighboring cell fails. In this implementation, if the third feedback message indicates that the neighboring-cell network device does not receive the random access request, it indicates that the random access initiated by the terminal device to the target neighboring cell fails.

Based on the second aspect, in a possible implementation, the third scheduling signaling is carried in DCI, and the DCI further indicates the terminal device to receive a feedback message from the serving network device for the random access request. In this way, the terminal device waits for the feedback message from the serving network device, thereby avoiding service interruption caused by the feedback message from the neighboring-cell network device.

A third aspect of this application provides a communication method, including:
If a neighboring-cell network device does not receive a random access request from a terminal device, the neighboring-cell network device sends a third feedback message to a serving network device, or the neighboring-cell network device does not send a feedback message to the serving network device, where the third feedback message indicates that the neighboring-cell network device does not receive the random access request, the random access request is used by the terminal device to request to access a target neighboring cell, and the target neighboring cell is a neighboring cell of a serving cell of the terminal device.

In the foregoing technical solution, if the neighboring-cell network device does not receive the random access request from the terminal device, the neighboring-cell network device sends the third feedback message to the serving network device, or the neighboring-cell network device does not send the feedback message to the serving network device. Therefore, the serving network device monitors the feedback message about the random access request from the neighboring-cell network device, so that the serving network device sends a corresponding feedback to the terminal device based on a feedback status. Therefore, the terminal device may determine, based on a feedback status of the serving network device, whether the random access succeeds. The terminal device does not need to wait for a response from the neighboring-cell network device to the random access request. In this way, the terminal device can determine an access status of the random access while reducing a service interruption time of the terminal device in a serving cell.

Based on the third aspect, in a possible implementation, the method further includes: The neighboring-cell network device sends a fourth feedback message to the serving network device if the neighboring-cell network device receives the random access request from the terminal device, where the fourth feedback message indicates that the neighboring-cell network device successfully receives the random access request.

In this implementation, if the neighboring-cell network device receives the random access request, the neighboring-cell network device sends the fourth feedback message to the serving network device, so that the serving network device feeds back, to the terminal device, that the random access succeeds. The terminal device does not need to wait for a response from the neighboring-cell network device to the random access request. In this way, the terminal device can determine an access status of the random access while reducing a service interruption time of the terminal device in a serving cell.

Based on the third aspect, in a possible implementation, the fourth feedback message further includes at least one of the following: a TA of the target neighboring cell, an identifier allocated by the target neighboring cell to the terminal device, or an uplink resource allocated by the target neighboring cell to the terminal device. In this implementation, for a case in which the random access of the terminal device succeeds, the fourth feedback message may further include at least one of the foregoing information. Therefore, when the terminal device hands over to the target neighboring cell, the terminal device can communicate with the neighboring-cell network device. In addition, before handing over to the target neighboring cell, the terminal device obtains the information shown above in advance, thereby reducing a service interruption time of the terminal device in the serving cell during cell handover of the terminal device.

A fourth aspect of this application provides a communication method, including:
If a neighboring-cell network device does not receive a random access request from a terminal device, the neighboring-cell network device sends a third feedback message to a serving network device, or the neighboring-cell network device does not send a feedback message to the serving network device, where the third feedback message indicates that the neighboring-cell network device does not receive the random access request, the random access request is used by the terminal device to request to access a target neighboring cell, and the target neighboring cell is a neighboring cell of a serving cell of the terminal device. Correspondingly, the serving network device receives the third feedback message from the neighboring-cell network device; and the serving network device sends any one of the following to the terminal device: a first feedback message, first scheduling signaling, and first indication information; or the serving network device does not send a feedback message to the terminal device, where the first feedback message indicates that random access of the terminal device fails, the first scheduling signaling is used to schedule the terminal device to retransmit the random access request, and the first indication information indicates the terminal device not to retransmit the random access request to the neighboring-cell network device.

Based on the fourth aspect, in a possible implementation, the method further includes: If the neighboring-cell network device receives the random access request from the terminal device, the neighboring-cell network device sends a fourth feedback message to the serving network device, where the fourth feedback message indicates that the neighboring-cell network device successfully receives the random access request. Correspondingly, the serving network device receives a fourth feedback message from the neighboring-cell network device; and the serving network device sends a second feedback message to the terminal device, or the serving network device does not send a feedback message to the terminal device, where the second feedback message indicates that random access of the terminal device succeeds.

Based on the fourth aspect, in a possible implementation, the second feedback message further includes at least one of the following: a TA of the target neighboring cell, an identifier allocated by the target neighboring cell to the terminal device, or an uplink resource allocated by the target neighboring cell to the terminal device.

Based on the fourth aspect, in a possible implementation, before the method, the method further includes: The serving network device sends third scheduling signaling to the terminal device, where the third scheduling signaling is used to schedule the terminal device to initiate the random access to the target neighboring cell. In this way, the terminal device initiates the random access to the neighboring-cell network device.

Based on the fourth aspect, in a possible implementation, the first scheduling signaling includes first resource configuration information, and the first resource configuration information is used by the terminal device to retransmit the random access request; the third scheduling signaling includes second resource configuration information, and the second resource configuration information is used by the terminal device to initially transmit the random access request; and the first resource configuration information is the same as the second resource configuration information.

Based on the fourth aspect, in a possible implementation, the first scheduling signaling includes second indication information, and the second indication information indicates the terminal device to retransmit the random access request.

Based on the fourth aspect, in a possible implementation, the first scheduling signaling further includes at least one of the following: third indication information or a power ramping parameter, where the third indication information indicates the terminal device whether to increase power for sending the random access request, and the power ramping parameter includes a power ramping value or a power ramping step.

Based on the fourth aspect, in a possible implementation, the method further includes: The serving network device sends fourth indication information to the terminal device, where the fourth indication information indicates the terminal device not to wait for a feedback message from the neighboring-cell network device for the random access request.

Based on the fourth aspect, in a possible implementation, the third feedback message specifically indicates that the random access initiated by the terminal device to the target neighboring cell fails.

Based on the fourth aspect, in a possible implementation, the third scheduling signaling is carried in DCI, and the DCI further indicates the terminal device to receive a feedback message from the serving network device for the random access request.

A fifth aspect of this application provides a communication method, including:
A terminal device sends a message A to a neighboring-cell network device, where the message A includes a preamble and uplink information, the preamble is used by the terminal device to initiate random access to a target neighboring cell, and the target neighboring cell is a neighboring cell of a serving cell of the terminal device; and the terminal device receives a first feedback message from a serving network device, where the first feedback message indicates that the random access initiated by the terminal device to the target neighboring cell succeeds, and the first feedback message further indicates a physical uplink control channel resource used by the terminal device to perform uplink communication with the target neighboring cell; or the terminal device receives a second feedback message from the serving network device, where the second feedback message indicates only that the random access initiated by the terminal device to the target neighboring cell succeeds, or indicates that the terminal device successfully feeds back the preamble to the target neighboring cell.

In the foregoing technical solution, the terminal device does not need to wait for a response from the neighboring-cell network device for the message A, but waits for the feedback message of the serving network device for the message A, thereby helping reduce a service interruption time of the terminal device in the serving cell. Further, if the terminal device receives the first feedback message or the second feedback message from the serving network device, the terminal device may determine whether the random access of the terminal device succeeds. In other words, the terminal device may determine, based on a feedback status of the serving network, whether the random access succeeds. Therefore, in the technical solution of this application, the terminal device can determine a status of the random access while reducing the service interruption time of the terminal device in the serving cell.

Based on the fifth aspect, in a possible implementation, the first feedback message includes an identifier of the PUCCH resource. In this implementation, if the random access of the terminal device succeeds, the first feedback message may further include the identifier of the PUCCH resource. Therefore, after the terminal device hands over to the target neighboring cell, the terminal device may perform uplink transmission with the target neighboring cell by using the PUCCH resource.

Based on the fifth aspect, in a possible implementation, the second feedback message further includes first scheduling signaling, and the first scheduling signaling indicates the terminal device to retransmit the uplink information in the message A, or indicates the terminal device to retransmit the message A.

In this implementation, if the target neighboring cell successfully receives only the preamble of the terminal device, the serving network device may indicate, by using the first scheduling signaling, the terminal device to retransmit the message A or the uplink information in the message A. Therefore, the neighboring-cell network device obtains the uplink information.

Based on the fifth aspect, in a possible implementation, before the terminal device sends the message A to the neighboring-cell network device, the method further includes: The terminal device receives second scheduling signaling from the serving network device, where the second scheduling signaling indicates the terminal device to initiate the random access to the target neighboring cell. In this way, the terminal device initiates the random access to the target neighboring cell.

Based on the fifth aspect, in a possible implementation, the second scheduling signaling further includes first indication information, the first indication information indicates the terminal device to initiate the random access to the target neighboring cell in a first random access manner, the first random access manner includes that the terminal device sends the message A to the target neighboring cell, and the message A includes the preamble and the uplink information. In this implementation, the serving network device may further explicitly indicate, by using the first indication information, the terminal device to initiate the random access to the target neighboring cell in the first random access manner. In this way, the terminal device initiates the random access to the target neighboring cell in the first random access manner.

Based on the fifth aspect, in a possible implementation, the method further includes: The terminal device receives a handover command from the serving network device, where the handover command indicates the terminal device to hand over to the target neighboring cell. This helps the terminal device hand over to the target neighboring cell. It should be noted that this implementation may alternatively be used as an independent solution, and is not dependent on the foregoing implementations.

Based on the fifth aspect, in a possible implementation, the method further includes: The terminal device determines at least one of the following: an uplink resource, an uplink transmit beam, uplink transmit power, or a TA of the target neighboring cell, where the uplink resource is used by the terminal device to communicate with the target neighboring cell, the uplink transmit beam is a beam used by the terminal device to perform uplink sending with the target neighboring cell, the uplink transmit power is power used by the terminal device to perform uplink sending with the target neighboring cell, and the TA of the target neighboring cell is a TA used by the terminal device to send an uplink signal to the target neighboring cell. In this implementation, the terminal device may determine at least one of the foregoing information, so that the terminal device can communicate with the neighboring-cell network device.

Based on the fifth aspect, in a possible implementation, that the terminal device determines the uplink resource includes: The terminal device uses a preconfigured dedicated PUCCH resource or a preconfigured CG-PUSCH resource as the uplink resource; or the terminal device determines the uplink resource by using a handover command, where the handover command includes the uplink resource; or the terminal device monitors, on a preconfigured time-frequency resource, third scheduling signaling sent by the neighboring-cell network device, where the third scheduling signaling indicates the uplink resource. In this implementation, several possible implementations in which the terminal device determines the uplink resource are shown, thereby enriching implementations of the solution.

Based on the fifth aspect, in a possible implementation, that the terminal device determines the uplink transmit power includes: The terminal device determines a path loss between the neighboring-cell network device and the terminal device based on a first path loss reference signal; and the terminal device determines the uplink transmit power based on the path loss. In this implementation, a possible implementation in which the terminal device determines the uplink transmit power is shown, thereby facilitating implementation of the solution.

Based on the fifth aspect, in a possible implementation, that the terminal device determines the uplink transmit power includes: The terminal device uses transmit power for sending the random access request by the terminal device as the uplink transmit power. Another implementation in which the terminal device determines the uplink transmit power is shown, so that the terminal device can communicate with the neighboring-cell network device.

Based on the fifth aspect, in a possible implementation, if the handover command further includes an activated TCI state of the target neighboring cell, the first path loss reference signal is a path loss reference signal associated with the activated TCI state; or if the handover command further includes a deactivated TCI state of the target neighboring cell, the first path loss reference signal is an SSB associated with a random access resource used by the terminal device to send the random access request; or if the handover command further includes a reference signal of the target neighboring cell, the first path loss reference signal is the reference signal of the target neighboring cell. In this implementation, a plurality of possible implementations in which the terminal device determines the first path loss reference signal are shown, thereby helping the terminal device determine the uplink transmit power.

Based on the fifth aspect, in a possible implementation, the handover command further includes a power control parameter associated with the activated TCI state or a power control parameter associated with the deactivated TCI state; and that the terminal device determines the uplink transmit power based on the path loss includes: The terminal device determines the uplink transmit power based on the path loss and the power control parameter. In this implementation, the handover command further carries the power control parameter, and the terminal device may determine the uplink transmit power based on the path loss and the power control parameter. This helps the terminal device perform uplink transmission with the serving network device by using appropriate uplink transmit power, and improves communication transmission performance.

Based on the fifth aspect, in a possible implementation, that the terminal device determines the TA of the target neighboring cell includes: If the handover command includes a TA of the target neighboring cell, the terminal device uses the TA in the handover command as the TA of the target neighboring cell; or if the handover command does not include a TA of the target neighboring cell, the terminal device considers, by default, that the TA of the target neighboring cell is equal to 0; or if the handover command does not include a TA of the target neighboring cell, the terminal device uses the TA carried in the first feedback message or the second feedback message as the TA of the target neighboring cell; or if the handover command includes an uplink timing advance indication, and the uplink timing advance indication indicates the terminal device to determine a TA of the target neighboring cell, the terminal device uses the TA of the target neighboring cell determined by the terminal device as the TA of the target neighboring cell; or if the handover command includes a TAG ID, the terminal device uses a TA associated with the TAG ID as the TA of the target neighboring cell; or if the handover command does not include a TA of the target neighboring cell, and the target neighboring cell is a current serving cell of the terminal device, the terminal device uses a TA of the serving cell as the TA of the target neighboring cell. In this implementation, a plurality of possible implementations in which the terminal device determines the TA of the target neighboring cell are shown, thereby helping the terminal device perform uplink transmission with the neighboring-cell network device, and improving communication transmission performance.

Based on the fifth aspect, in a possible implementation, that the terminal device determines the uplink transmit beam includes: If the handover command includes a TCI state indicated by the neighboring-cell network device for the terminal device, the terminal device determines the uplink transmit beam based on the TCI state indicated in the handover command; or if a TCI state indicated in the handover command is a downlink TCI state, the terminal device determines the uplink transmit beam based on a receive beam of an SSB associated with a random access resource used to send the preamble. In this implementation, a plurality of possible implementations in which the terminal device determines the uplink transmit beam are shown, thereby helping the terminal device perform uplink transmission with the neighboring-cell network device, and improving communication transmission performance.

A sixth aspect of this application provides a communication method, including:
a serving network device sends a first feedback message to a terminal device if the serving network device receives a successful random access response message from a neighboring-cell network device, where the first feedback message indicates that random access initiated by the terminal device to a target neighboring cell succeeds, the target neighboring cell is a neighboring cell of a serving cell of the terminal device, and the first feedback message further indicates a PUCCH resource used by the terminal device to perform uplink transmission with the target neighboring cell; or the serving network device sends a second feedback message to the terminal device if the serving network device receives a fallback random access response message from the neighboring-cell network device, where the second feedback message indicates only that random access initiated by the terminal device to the target neighboring cell succeeds, or indicates that the terminal device successfully feeds back a preamble to the target neighboring cell.

In the foregoing technical solution, if the serving network device receives the successful random access response message from the neighboring-cell network device, the serving network device sends the first feedback message to the terminal device. If the serving network device receives the fallback random access response message from the neighboring-cell network device, the serving network device sends the second feedback message to the terminal device. In this way, the terminal device determines that the random access succeeds. It can be learned that the serving network device may monitor the feedback message from the neighboring-cell network device for the random access of the terminal device, and send the corresponding feedback message to the terminal device based on the feedback message. In this way, the terminal device does not need to wait for a response from the neighboring-cell network device for the random access, but waits for the feedback message of the serving network device for the random access request, thereby helping reduce a service interruption time of the terminal device in the serving cell. Therefore, in the technical solution of this application, the terminal device can determine an access status of the random access while reducing the service interruption time of the terminal device in the serving cell.

Based on the sixth aspect, in a possible implementation, the second feedback message further includes first scheduling signaling, and the first scheduling signaling indicates the terminal device to retransmit uplink information in a message A, or indicates the terminal device to retransmit a message A, where the message A includes a preamble and uplink information. In this implementation, if the target neighboring cell successfully receives only the preamble of the terminal device, the serving network device may indicate, by using the first scheduling signaling, the terminal device to retransmit the message A or the uplink information in the message A. Therefore, the neighboring-cell network device obtains the uplink information.

Based on the sixth aspect, in a possible implementation, the successful random access response message includes an identifier of the PUCCH resource configured by the neighboring-cell network device for the terminal device.

Based on the sixth aspect, in a possible implementation, the method further includes: The serving network device sends a handover command to the terminal device, where the handover command indicates the terminal device to hand over to the target neighboring cell. In this way, the terminal device initiates the random access to the target neighboring cell. It should be noted that this implementation may alternatively be used as an independent solution, and is not dependent on the foregoing implementations.

Based on the sixth aspect, in a possible implementation, the handover command further includes a TA of the target neighboring cell, and the TA of the target neighboring cell is a TA used by the terminal device to send an uplink signal to the target neighboring cell. Therefore, before handing over to the target neighboring cell, the terminal device obtains the TA of the target neighboring cell in advance, thereby reducing a service interruption time of the terminal device in the serving cell during cell handover of the terminal device.

Based on the sixth aspect, in a possible implementation, the handover command further includes an identifier of the PUCCH resource used by the terminal device to perform uplink communication with the target neighboring cell. Therefore, after handing over to the target neighboring cell, the terminal device may perform uplink transmission with the target neighboring cell by using the PUCCH resource.

Based on the sixth aspect, in a possible implementation, the method further includes: The serving network device sends second scheduling signaling to the terminal device, where the second scheduling signaling indicates the terminal device to initiate the random access to the target neighboring cell. In this way, the terminal device initiates the random access to the target neighboring cell.

Based on the sixth aspect, in a possible implementation, the second scheduling signaling further includes first indication information, the first indication information indicates the terminal device to initiate the random access to the target neighboring cell in a first random access manner, the first random access manner includes that the terminal device sends the message A to the target neighboring cell, and the message A includes the preamble and the uplink information. In this way, the terminal device initiates the random access to the target neighboring cell in the first random access manner.

A seventh aspect of this application provides a communication method, including:
a neighboring-cell network device sends a successful random access response message to a serving network device if the neighboring-cell network device successfully receives a message A sent by a terminal device, where the message A includes a preamble and uplink information of the terminal device, where the preamble is used by the terminal device to initiate random access to a target neighboring cell, and the target neighboring cell is a neighboring cell of a serving cell of the terminal device; or the neighboring-cell network device sends a fallback random access response message to the serving network device if the neighboring-cell network device successfully receives only the preamble in the message A of the terminal device.

In the foregoing technical solution, if the neighboring-cell network device successfully receives the message A sent by the terminal device, the neighboring-cell network device sends the successful random access response message to the serving network device. If the neighboring-cell network device successfully receives only the preamble in the message A of the terminal device, the neighboring-cell network device sends the fallback random access response message to the serving network device. Therefore, the serving network device monitors a feedback message about the message A from the neighboring-cell network device, so that the serving network device sends a corresponding feedback to the terminal device based on a feedback status. Therefore, the terminal device may determine, based on a feedback status of the serving network device, whether the random access succeeds. The terminal device does not need to wait for a response from the neighboring-cell network device for the message A. In this way, the terminal device can determine an access status of the random access while reducing a service interruption time of the terminal device in a serving cell.

Based on the seventh aspect, in a possible implementation, the successful random access response message includes an identifier of a PUCCH resource configured by the neighboring-cell network device for the terminal device. Therefore, the neighboring-cell network device configures the PUCCH resource for the terminal device, and after the terminal device hands over to the target neighboring cell, the terminal device may perform uplink transmission with the target neighboring cell by using the PUCCH resource.

Based on the seventh aspect, in a possible implementation, the method further includes: The neighboring-cell network device receives the message A from the terminal device.

An eighth aspect of this application provides a communication method, including:
a neighboring-cell network device sends a successful random access response message to a serving network device if the neighboring-cell network device successfully receives a message A sent by a terminal device, where the message A includes a preamble and uplink information of the terminal device, where the preamble is used by the terminal device to initiate random access to a target neighboring cell, and the target neighboring cell is a neighboring cell of a serving cell of the terminal device. Correspondingly, the serving network device receives the successful random access response message from the neighboring-cell network device; and the serving network device sends a first feedback message to the terminal device, where the first feedback message indicates that the random access initiated by the terminal device to the target neighboring cell succeeds, and the first feedback message further indicates a physical uplink control channel resource used by the terminal device to perform uplink transmission with the target neighboring cell; or
the neighboring-cell network device sends a fallback random access response message to the serving network device if the neighboring-cell network device successfully receives only the preamble in the message A of the terminal device. Correspondingly, the serving network device receives the fallback random access response message from the neighboring-cell network device; and the serving network device sends a second feedback message to the terminal device, where the second feedback message indicates only that the random access initiated by the terminal device to the target neighboring cell succeeds, or indicates that the terminal device successfully feeds back the preamble to the target neighboring cell.

Based on the eighth aspect, in a possible implementation, the successful random access response message includes an identifier of the PUCCH resource configured by the neighboring-cell network device for the terminal device.

Based on the eighth aspect, in a possible implementation, the second feedback message further includes first scheduling signaling, and the first scheduling signaling indicates the terminal device to retransmit the uplink information in the message A, or indicates the terminal device to retransmit the message A, where the message A includes the preamble and the uplink information.

Based on the eighth aspect, in a possible implementation, the method further includes: The serving network device sends a handover command to the terminal device, where the handover command indicates the terminal device to hand over to the target neighboring cell. In this way, the terminal device initiates the random access to the target neighboring cell. It should be noted that this implementation may alternatively be used as an independent solution, and is not dependent on the foregoing implementations.

Based on the eighth aspect, in a possible implementation, the handover command further includes a TA of the target neighboring cell, and the TA of the target neighboring cell is a TA used by the terminal device to send an uplink signal to the target neighboring cell.

Based on the eighth aspect, in a possible implementation, the handover command further includes an identifier of the PUCCH resource used by the terminal device to perform uplink communication with the target neighboring cell.

Based on the eighth aspect, in a possible implementation, the method further includes: The serving network device sends second scheduling signaling to the terminal device, where the second scheduling signaling indicates the terminal device to initiate the random access to the target neighboring cell.

Based on the eighth aspect, in a possible implementation, the second scheduling signaling further includes first indication information, the first indication information indicates the terminal device to initiate the random access to the target neighboring cell in a first random access manner, the first random access manner includes that the terminal device sends the message A to the target neighboring cell, and the message A includes the preamble and the uplink information.

A ninth aspect of this application provides a communication method, including:
A terminal device sends a message 3 to a neighboring-cell network device, where the message 3 is a message 3 used by the terminal device to initiate random access to a target neighboring cell, the target neighboring cell is a neighboring cell of a serving cell of the terminal device, and the message 3 includes an identifier of the terminal device; and the terminal device receives a message 4 from a serving network device, where the message 4 indicates that the random access initiated by the terminal device to the target neighboring cell succeeds.

It can be learned from the foregoing technical solution that the terminal device does not need to wait for a response from the neighboring-cell network device for the message 3, but waits for a response from the serving network device for the message 3, thereby reducing a service interruption time of the terminal device in the serving cell. Further, the terminal device receives the message 4 from the serving network device, where the message 4 indicates that the random access initiated by the terminal device to the target neighboring cell succeeds. Therefore, the terminal device may determine, based on a feedback status of the serving network device, that the random access succeeds. Therefore, in the technical solution of this application, the terminal device can determine an access status of the random access while reducing the service interruption time of the terminal device in the serving cell.

Based on the ninth aspect, in a possible implementation, the method further includes: The terminal device sends a message 1 to the neighboring-cell network device, where the message 1 includes a first preamble of the terminal device; and the terminal device receives a message 2 from the neighboring-cell network device or the serving network device, where the message 2 is a response to the message 1 sent by the terminal device to the neighboring-cell network device. In this implementation, two possible implementations in which the terminal device receives and sends the message 1 and the message 2 are shown. An implementation in which the terminal device receives the message 2 from the serving network device helps prevent the terminal device from waiting for the response from the neighboring-cell network device for the message 1, thereby reducing a service interruption time of the terminal device in the serving cell.

Based on the ninth aspect, in a possible implementation, the method further includes: The terminal device sends a message 1 to the neighboring-cell network device, where the message 1 includes a first preamble of the terminal device; and if the terminal device does not receive a message 2 from the serving network device within preset duration, the terminal device retransmits the message 1 to the neighboring-cell network device; or the terminal device determines a second preamble, and sends the second preamble to the neighboring-cell network device. In this implementation, if the terminal device does not receive the message 2 from the serving network device within the preset duration, it indicates that the random access of the terminal device fails. The terminal device may continue to initiate random access to the target neighboring cell by using the first preamble, or may reselect a second preamble, and initiate random access to the target neighboring cell. This helps improve a success rate of random access.

Based on the ninth aspect, in a possible implementation, that the terminal device retransmits the message 1 to the neighboring-cell network device includes:
The terminal device determines, based on a preconfigured power ramping parameter, transmit power used to send the message 1; and the terminal device retransmits the message 1 to the neighboring-cell network device by using the transmit power. In this implementation, the terminal device may increase the transmit power for sending the message 1, thereby helping improve a success rate of random access.

Based on the ninth aspect, in a possible implementation, the method further includes: The terminal device receives a handover command from the serving network device, where the handover command indicates the terminal device to hand over to the target neighboring cell. This helps the terminal device hand over to the target neighboring cell. It should be noted that this implementation may alternatively be used as an independent solution, and is not dependent on the foregoing implementations.

Based on the ninth aspect, in a possible implementation, the method further includes: The terminal device determines at least one of the following: an uplink resource, an uplink transmit beam, uplink transmit power, or a TA of the target neighboring cell, where the uplink resource is used by the terminal device to communicate with the target neighboring cell, the uplink transmit beam is a beam used by the terminal device to perform uplink sending with the target neighboring cell, the uplink transmit power is power used by the terminal device to perform uplink sending with the target neighboring cell, and the TA of the target neighboring cell is a TA used by the terminal device to send an uplink signal to the target neighboring cell. In this implementation, the terminal device may determine at least one of the foregoing information, so that the terminal device can communicate with the neighboring-cell network device.

Based on the ninth aspect, in a possible implementation, that the terminal device determines the uplink resource includes: The terminal device uses a preconfigured dedicated PUCCH resource or a preconfigured CG-PUSCH resource as the uplink resource; or the terminal device determines the uplink resource by using a handover command, where the handover command includes the uplink resource; or the terminal device monitors, on a preconfigured time-frequency resource, first scheduling signaling sent by the neighboring-cell network device, where the first scheduling signaling indicates the uplink resource. In this implementation, several possible implementations in which the terminal device determines the uplink resource are shown, thereby enriching implementations of the solution.

Based on the ninth aspect, in a possible implementation, that the terminal device determines the uplink transmit power includes: The terminal device determines a path loss between the neighboring-cell network device and the terminal device based on a first path loss reference signal; and the terminal device determines the uplink transmit power based on the path loss. In this implementation, a possible implementation in which the terminal device determines the uplink transmit power is shown, thereby facilitating implementation of the solution.

Based on the ninth aspect, in a possible implementation, that the terminal device determines the uplink transmit power includes: The terminal device uses transmit power for sending the random access request by the terminal device as the uplink transmit power. Another implementation in which the terminal device determines the uplink transmit power is shown, so that the terminal device can communicate with the neighboring-cell network device.

Based on the ninth aspect, in a possible implementation, if the handover command further includes an activated TCI state of the target neighboring cell, the first path loss reference signal is a path loss reference signal associated with the activated TCI state; or if the handover command further includes a deactivated TCI state of the target neighboring cell, the first path loss reference signal is an SSB associated with a random access resource used by the terminal device to send the random access request; or if the handover command further includes a reference signal of the target neighboring cell, the first path loss reference signal is the reference signal of the target neighboring cell. In this implementation, a plurality of possible implementations in which the terminal device determines the first path loss reference signal are shown, thereby helping the terminal device determine the uplink transmit power.

Based on the ninth aspect, in a possible implementation, the handover command further includes a power control parameter associated with the activated TCI state or a power control parameter associated with the deactivated TCI state; and that the terminal device determines the uplink transmit power based on the path loss includes: The terminal device determines the uplink transmit power based on the path loss and the power control parameter. In this implementation, the handover command further carries the power control parameter, and the terminal device may determine the uplink transmit power based on the path loss and the power control parameter. This helps the terminal device perform uplink transmission with the serving network device by using appropriate uplink transmit power, and improves communication transmission performance.

Based on the ninth aspect, in a possible implementation, that the terminal device determines the TA of the target neighboring cell includes: If the handover command includes a TA of the target neighboring cell, the terminal device uses the TA in the handover command as the TA of the target neighboring cell; or if the handover command does not include a TA of the target neighboring cell, the terminal device considers, by default, that the TA of the target neighboring cell is equal to 0; or if the handover command does not include a TA of the target neighboring cell, the terminal device uses the TA carried in the message 2 as the TA of the target neighboring cell; or if the handover command includes an uplink timing advance indication, and the uplink timing advance indication indicates the terminal device to determine a TA of the target neighboring cell, the terminal device uses the TA of the target neighboring cell determined by the terminal device as the TA of the target neighboring cell; or if the handover command includes a timing advance group identifier (TA group ID, TAG ID), the terminal device uses a TA associated with the TAG ID as the TA of the target neighboring cell; or if the handover command does not include a TA of the target neighboring cell, and the target neighboring cell is a current serving cell of the terminal device, the terminal device uses a TA of the serving cell as the TA of the target neighboring cell. In this implementation, a plurality of possible implementations in which the terminal device determines the TA of the target neighboring cell are shown, thereby helping the terminal device perform uplink transmission with the neighboring-cell network device, and improving communication transmission performance.

Based on the ninth aspect, in a possible implementation, that the terminal device determines the uplink transmit beam includes: If the handover command includes a TCI state indicated by the neighboring-cell network device for the terminal device, the terminal device determines the uplink transmit beam based on the TCI state indicated in the handover command; or if a TCI state indicated in the handover command is a downlink TCI state, the terminal device determines the uplink transmit beam based on a receive beam of an SSB associated with a random access resource used to send the preamble. In this implementation, a plurality of possible implementations in which the terminal device determines the uplink transmit beam are shown, thereby helping the terminal device perform uplink transmission with the neighboring-cell network device, and improving communication transmission performance.

A tenth aspect of this application provides a communication method, including:
A neighboring-cell network device receives a message 3 from a terminal device, where the message 3 is a message 3 used by the terminal device to initiate random access to a target neighboring cell, the target neighboring cell is a neighboring cell of a serving cell of the terminal device, and the message 3 includes an identifier of the terminal device; and the neighboring-cell network device sends a message 4 to a serving network device, where the message 4 indicates that the random access initiated by the terminal device to the target neighboring cell succeeds.

It can be learned from the foregoing technical solution that the neighboring-cell network device receives the message 3 from the terminal device. Then, the neighboring-cell network device sends the message 4 to the serving network device, where the message 4 indicates that the random access initiated by the terminal device to the target neighboring cell succeeds. Therefore, the serving network device monitors a feedback message from the neighboring-cell network device for the message 3, so that the serving network device sends a corresponding feedback to the terminal device based on a feedback status. Therefore, the terminal device may determine, based on a feedback status of the serving network device, whether the random access of the terminal device succeeds. The terminal device does not need to wait for a response from the neighboring-cell network device for the message 3. In this way, the terminal device can determine an access status of the random access while reducing a service interruption time of the terminal device in a serving cell.

Based on the tenth aspect, in a possible implementation, before the neighboring-cell network device receives the message 3 from the terminal device, the method further includes: The neighboring-cell network device receives a message 1 from the terminal device, where the message 1 includes a first preamble, and the first preamble is used by the terminal device to initiate the random access to the target neighboring cell; and the neighboring-cell network device sends a message 2 to the terminal device or the serving network device, where the message 2 is a response to the message 1. In this implementation, two possible implementations in which the terminal device receives and sends the message 1 and the message 2 are shown. The neighboring-cell network device may send the message 2 to the serving network device, to respond to the message 1. In this case, the serving network device may feed back the response to the terminal device. This helps prevent the terminal device from waiting for the response from the neighboring-cell network device for the message 1, thereby reducing a service interruption time of the terminal device in the serving cell.

Based on the tenth aspect, in a possible implementation, the message 2 further includes an identifier of the target neighboring cell. In this way, when the terminal device separately sends the message 1 to a plurality of neighboring cells in a short time, the terminal device determines that the message 2 is the response to the message 1 sent by the terminal device to the target neighboring cell.

Based on the tenth aspect, in a possible implementation, the method further includes: The neighboring-cell network device receives first information from the serving network device, where the first information includes at least one of the following: first indication information, an index of a first SSB of the target neighboring cell, an identifier of the terminal device, or duration used for receiving the message 1, and the first indication information indicates that there is one terminal device that initiates random access to the target neighboring cell by using a random access resource associated with the first SSB. In this implementation, the neighboring-cell network device receives the first information from the serving network device, so that the neighboring-cell network device receives the message 1 from the terminal device.

Based on the tenth aspect, in a possible implementation, that the neighboring-cell network device receives the message 1 from the terminal device includes: The neighboring-cell network device receives the message 1 from the terminal device based on the first information.

Based on the tenth aspect, in a possible implementation, the identifier of the terminal device is a cell radio network temporary identifier (cell radio network temporary identifier, C-RNTI) used by the terminal device in the serving cell.

An eleventh aspect of this application provides a communication method, including:
A serving network device receives a message 4 from a neighboring-cell network device, where the message 4 indicates that random access initiated by a terminal device to a target neighboring cell succeeds, and the target neighboring cell is a neighboring cell of a serving cell of the terminal device; and the serving network device sends the message 4 to the terminal device.

In the foregoing technical solution, the serving network device receives the message 4 from the neighboring-cell network device, and sends the message 4 to the terminal device. Therefore, the terminal device does not need to wait for a response from the neighboring-cell network device for a message 3, but waits for a response from the serving network device for the message 3, thereby reducing a service interruption time of the terminal device in the serving cell. Further, the terminal device receives the message 4 from the serving network device, where the message 4 indicates that the random access initiated by the terminal device to the target neighboring cell succeeds. Therefore, the terminal device may determine, based on a feedback status of the serving network device, that the random access succeeds. Therefore, in the technical solution of this application, the terminal device can determine an access status of the random access while reducing the service interruption time of the terminal device in the serving cell.

Based on the eleventh aspect, in a possible implementation, the method further includes: The serving network device receives a message 2 from the neighboring-cell network device, where the message 2 is a response to a message 1 sent by the terminal device to the neighboring-cell network device; and the serving network device sends the message 2 to the terminal device. In this way, the serving network device feeds back the response to the message 1 to the terminal device, to prevent the terminal device from waiting for the response from the neighboring-cell network device for the message 1, thereby reducing a service interruption time of the terminal device in the serving cell.

Based on the eleventh aspect, in a possible implementation, the method further includes: The serving network device sends first information to the neighboring-cell network device, where the first information is used by the neighboring-cell network device to receive the message 1, and the first information includes at least one of the following: first indication information, an index of a first SSB of the target neighboring cell, an identifier of the terminal device, or duration used for receiving the message 1, where the first indication information indicates that there is one terminal device that initiates random access to the target neighboring cell by using a random access resource associated with the first SSB. In this implementation, the serving network device sends the first information to the neighboring-cell network device, so that the neighboring-cell network device receives the message 1 from the terminal device.

Based on the eleventh aspect, in a possible implementation, the method further includes: The serving network device sends a handover command to the terminal device, where the handover command indicates the terminal device to hand over to the target neighboring cell. In this way, the terminal device initiates the random access to the target neighboring cell. It should be noted that this implementation may alternatively be used as an independent solution, and is not dependent on the foregoing implementations.

Based on the eleventh aspect, in a possible implementation, the handover command further includes a TA of the target neighboring cell, and the TA of the target neighboring cell is a TA used by the terminal device to send an uplink signal to the target neighboring cell.

Based on the eleventh aspect, in a possible implementation, the handover command further includes an identifier of a PUCCH resource used by the terminal device to perform uplink communication with the target neighboring cell.

According to a twelfth aspect of this application, a communication method is provided, and includes:
A neighboring-cell network device receives a message 3 from a terminal device, where the message 3 is a message 3 used by the terminal device to initiate random access to a target neighboring cell, the target neighboring cell is a neighboring cell of a serving cell of the terminal device, and the message 3 includes an identifier of the terminal device; and the neighboring-cell network device sends a message 4 to a serving network device, where the message 4 indicates that the random access initiated by the terminal device to the target neighboring cell succeeds. Correspondingly, the serving network device receives the message 4 from the neighboring-cell network device; and the neighboring-cell network device sends the message 4 to the terminal device

Based on the twelfth aspect, in a possible implementation, the method further includes: The neighboring-cell network device sends a message 2 to the serving network device, where the message 2 is a response to a message 1; the serving network device receives the message 2 from the neighboring-cell network device, where the message 2 is the response to the message 1 sent by the terminal device to the neighboring-cell network device; and the serving network device sends the message 2 to the terminal device.

Based on the twelfth aspect, in a possible implementation, the method further includes: The serving network device sends first information to the neighboring-cell network device, where the first information is used by the neighboring-cell network device to receive the message 1, and the first information includes at least one of the following: first indication information, an index of a first SSB of the target neighboring cell, an identifier of the terminal device, or duration used for receiving the message 1, where the first indication information indicates that there is one terminal device that initiates random access to the target neighboring cell by using a random access resource associated with the first SSB. Correspondingly, the neighboring-cell network device receives the first information from the serving network device.

Based on the twelfth aspect, in a possible implementation, the method further includes: The serving network device sends a handover command to the terminal device, where the handover command indicates the terminal device to hand over to the target neighboring cell.

Based on the twelfth aspect, in a possible implementation, the handover command further includes a TA of the target neighboring cell, and the TA of the target neighboring cell is a TA used by the terminal device to send an uplink signal to the target neighboring cell.

Based on the twelfth aspect, in a possible implementation, the handover command further includes an identifier of a PUCCH resource used by the terminal device to perform uplink communication with the target neighboring cell.

Based on the twelfth aspect, in a possible implementation, the identifier of the terminal device is a C-RNTI used by the terminal device in the serving cell.

A thirteenth aspect of this application provides a communication apparatus, including:
a transceiver module, configured to send a random access request to a neighboring-cell network device, where the random access request is used to initiate random access to a target neighboring cell, and the target neighboring cell is a neighboring cell of a serving cell of the communication apparatus; and retransmit the random access request to the neighboring-cell network device if the communication apparatus does not receive a feedback message from a serving network device for the random access request, or the communication apparatus receives at least one of the following from the serving network device: a first feedback message or first scheduling signaling, where the first feedback message indicates that the random access of the communication apparatus fails, and the first scheduling signaling is used to schedule the communication apparatus to retransmit the random access request.

Based on the thirteenth aspect, in a possible implementation, the communication apparatus further includes a processing module, where
the processing module is configured to determine that the random access of the communication apparatus succeeds if the communication apparatus receives a second feedback message from the serving network device, and the second feedback message indicates that the neighboring-cell network device successfully receives the random access request.

Based on the thirteenth aspect, in a possible implementation, the communication apparatus further includes a processing module, where
the processing module is configured to determine that the random access of the communication apparatus succeeds if the communication apparatus receives first indication information from the serving network device, where the first indication information indicates the communication apparatus not to retransmit the random access request to the neighboring-cell network device.

Based on the thirteenth aspect, in a possible implementation, the second feedback message further includes at least one of the following: a TA of the target neighboring cell, an identifier allocated by the target neighboring cell to the communication apparatus, or an uplink resource allocated by the target neighboring cell to the communication apparatus.

Based on the thirteenth aspect, in a possible implementation, the transceiver module is specifically configured to:
retransmit the random access request to the neighboring-cell network device based on a preconfigured quantity of retransmission times and/or a preconfigured power ramping parameter.

Based on the thirteenth aspect, in a possible implementation, the first feedback message or the first scheduling signaling further includes a power ramping parameter; and the transceiver module is specifically configured to retransmit the random access request to the neighboring-cell network device based on the power ramping parameter.

Based on the thirteenth aspect, in a possible implementation, the transceiver module is further configured to:
receive a handover command from the serving network device, where the handover command indicates the communication apparatus to hand over to the target neighboring cell.

Based on the thirteenth aspect, in a possible implementation, the communication apparatus further includes a processing module, where
the processing module is configured to determine at least one of the following: an uplink resource, an uplink transmit beam, uplink transmit power, or a TA of the target neighboring cell, where the uplink resource is used by the communication apparatus to perform uplink transmission with the target neighboring cell, the uplink transmit beam is a beam used by the communication apparatus to perform uplink sending with the target neighboring cell, the uplink transmit power is power used by the communication apparatus to perform uplink sending with the target neighboring cell, and the TA of the target neighboring cell is a TA used by the communication apparatus to send an uplink signal to the target neighboring cell.

Based on the thirteenth aspect, in a possible implementation, the processing module is specifically configured to:
use a preconfigured dedicated PUCCH resource or a preconfigured CG-PUSCH resource as the uplink resource; or
determine the uplink resource by using a handover command, where the handover command includes the uplink resource; or
monitor, on a preconfigured time-frequency resource, second scheduling signaling sent by the neighboring-cell network device, where the second scheduling signaling indicates the uplink resource.

Based on the thirteenth aspect, in a possible implementation, the processing module is specifically configured to:
determine a first path loss reference signal;
determine a path loss between the neighboring-cell network device and the communication apparatus based on the first path loss reference signal; and
determine the uplink transmit power based on the path loss.

Based on the thirteenth aspect, in a possible implementation, the processing module is specifically configured to:
use transmit power for sending the random access request by the communication apparatus as the uplink transmit power.

Based on the thirteenth aspect, in a possible implementation, if the handover command further includes an activated TCI state of the target neighboring cell, the first path loss reference signal is a path loss reference signal associated with the activated TCI state; or if the handover command further includes a deactivated TCI state of the target neighboring cell, the first path loss reference signal is an SSB associated with a random access resource used by the communication apparatus to send the random access request; or if the handover command further includes a reference signal of the target neighboring cell, the first path loss reference signal is the reference signal of the target neighboring cell.

Based on the thirteenth aspect, in a possible implementation, the handover command further includes a power control parameter associated with the activated TCI state of the target neighboring cell or a power control parameter associated with the deactivated TCI state of the target neighboring cell; and the processing module is specifically configured to:
determine the uplink transmit power based on the path loss and the power control parameter.

Based on the thirteenth aspect, in a possible implementation, the processing module is specifically configured to:
if the handover command includes a TA of the target neighboring cell, use the TA in the handover command as the TA of the target neighboring cell; or
if the handover command does not include a TA of the target neighboring cell, consider, by default, that the TA of the target neighboring cell is equal to 0; or
if the handover command does not include a TA of the target neighboring cell, use the TA carried in the second feedback message as the TA of the target neighboring cell; or
if the handover command includes an uplink timing advance indication, and the uplink timing advance indication indicates the communication apparatus to determine a TA of the target neighboring cell, use the TA of the target neighboring cell determined by the communication apparatus as the TA of the target neighboring cell; or
if the handover command includes a TAG ID, use a TA associated with the TAG ID as the TA of the target neighboring cell; or
if the handover command does not include a TA of the target neighboring cell, and the target neighboring cell is a current serving cell of the communication apparatus, use a TA of the serving cell as the TA of the target neighboring cell.

Based on the thirteenth aspect, in a possible implementation, the processing module is specifically configured to:
if the handover command includes a TCI state indicated by the neighboring-cell network device for the communication apparatus, determine the uplink transmit beam based on the TCI state indicated in the handover command; or
if a TCI state indicated in the handover command is a downlink TCI state, determine the uplink transmit beam based on a receive beam of an SSB associated with a random access resource used to send the random access request.

Based on the thirteenth aspect, in a possible implementation, the first scheduling signaling includes second indication information, and the second indication information indicates the communication apparatus to retransmit the random access request.

Based on the thirteenth aspect, in a possible implementation, the first scheduling signaling further includes at least one of the following: third indication information or a power ramping parameter, where the third indication information indicates the communication apparatus whether to increase power for sending the random access request, and the power ramping parameter includes a power ramping value or a power ramping step.

Based on the thirteenth aspect, in a possible implementation, the transceiver module is further configured to:
receive fourth indication information from the serving network device, where the fourth indication information indicates the communication apparatus not to wait for a feedback message from the neighboring-cell network device for the random access request; and continue to communicate with the serving network device without waiting for the feedback message from the neighboring-cell network device for the random access request.

Based on the thirteenth aspect, in a possible implementation, the transceiver module is further configured to:
receive third scheduling signaling from the serving network device, where the third scheduling signaling is used to schedule the communication apparatus to initiate the random access to the target neighboring cell.

Based on the thirteenth aspect, in a possible implementation, the third scheduling signaling is carried in DCI, the DCI indicates the communication apparatus to send the random access request to the neighboring-cell network device, and the DCI further indicates the communication apparatus to receive a feedback message from the serving network device for the random access request.

A fourteenth aspect of this application provides a communication apparatus, including:
a transceiver module is configured to: if the communication apparatus does not receive a feedback message from a neighboring-cell network device for a random access request of a terminal device, or the communication apparatus receives a third feedback message from the neighboring-cell network device and the third feedback message indicates that the neighboring-cell network device does not receive the random access request, send at least one of the following to the terminal device: a first feedback message, first scheduling signaling, or first indication information; or skip sending a feedback message to the terminal device, where
the first random access request is used by the terminal device to request to access a target neighboring cell, and the target neighboring cell is a neighboring cell of a serving cell of the terminal device; and the first feedback message indicates that random access of the terminal device fails, the first scheduling signaling is used to schedule the terminal device to retransmit the random access request, and the first indication information indicates the terminal device not to retransmit the random access request to the neighboring-cell network device.

Based on the fourteenth aspect, in a possible implementation, the transceiver module is further configured to:
if the communication apparatus receives a fourth feedback message from the neighboring-cell network device, and the fourth feedback message indicates that the neighboring-cell network device successfully receives the random access request of the terminal device, send a second feedback message to the terminal device, or skip sending a feedback message to the terminal device, where the second feedback message indicates that random access of the terminal device succeeds.

Based on the fourteenth aspect, in a possible implementation, the second feedback message further includes at least one of the following: a TA of the target neighboring cell, an identifier allocated by the target neighboring cell to the terminal device, or an uplink resource allocated by the target neighboring cell to the terminal device.

Based on the fourteenth aspect, in a possible implementation, the transceiver module is further configured to send third scheduling signaling to the terminal device, where the third scheduling signaling is used to schedule the terminal device to initiate the random access to the target neighboring cell.

Based on the fourteenth aspect, in a possible implementation, the first scheduling signaling includes first resource configuration information, and the first resource configuration information is used by the terminal device to retransmit the random access request; the third scheduling signaling includes second resource configuration information, and the second resource configuration information is used by the terminal device to initially transmit the random access request; and the first resource configuration information is the same as the second resource configuration information.

Based on the fourteenth aspect, in a possible implementation, the first scheduling signaling includes second indication information, and the second indication information indicates the terminal device to retransmit the random access request.

Based on the fourteenth aspect, in a possible implementation, the first scheduling signaling further includes at least one of the following: third indication information or a power ramping parameter, where the third indication information indicates the terminal device whether to increase power for sending the random access request, and the power ramping parameter includes a power ramping value or a power ramping step.

Based on the fourteenth aspect, in a possible implementation, the transceiver module is further configured to send fourth indication information to the terminal device, where the fourth indication information indicates the terminal device not to wait for a feedback message from the neighboring-cell network device for the random access request.

Based on the fourteenth aspect, in a possible implementation, the third feedback message specifically indicates that the random access initiated by the terminal device to the target neighboring cell fails.

Based on the fourteenth aspect, in a possible implementation, the third scheduling signaling is carried in DCI, the DCI indicates the terminal device to send the random access request to the neighboring-cell network device, and the DCI further indicates the terminal device to receive a feedback message from the communication apparatus for the random access request.

A fifteenth aspect of this application provides a communication apparatus, including:
a transceiver module, configured to: if the communication apparatus does not receive a random access request from a terminal device, send a third feedback message to a serving network device, or skip sending a feedback message to the serving network device, where
the third feedback message indicates that the communication apparatus does not receive the random access request, the random access request is used by the terminal device to request to access a target neighboring cell, and the target neighboring cell is a neighboring cell of a serving cell of the terminal device.

Based on the fifteenth aspect, in a possible implementation, the transceiver module is further configured to:
send a fourth feedback message to the serving network device if the communication apparatus receives the random access request from the terminal device, where the fourth feedback message indicates that the communication apparatus successfully receives the random access request.

Based on the fifteenth aspect, in a possible implementation, the fourth feedback message further includes at least one of the following: a TA of the target neighboring cell, an identifier allocated by the target neighboring cell to the terminal device, or an uplink resource allocated by the target neighboring cell to the terminal device.

A sixteenth aspect of this application provides a communication apparatus, including:
a transceiver module, configured to: send a message A to a neighboring-cell network device, where the message A includes a preamble and uplink information, the preamble is used by the communication apparatus to initiate random access to a target neighboring cell, and the target neighboring cell is a neighboring cell of a serving cell of the communication apparatus; and receive a first feedback message from a serving network device, where the first feedback message indicates that the random access initiated by the communication apparatus to the target neighboring cell succeeds, and the first feedback message further indicates a physical uplink control channel resource used by the communication apparatus to perform uplink communication with the target neighboring cell; or receive a second feedback message from the serving network device, where the second feedback message indicates only that the random access initiated by the communication apparatus to the target neighboring cell succeeds, or indicates that the communication apparatus successfully feeds back the preamble to the target neighboring cell.

Based on the sixteenth aspect, in a possible implementation, the first feedback message includes an identifier of the PUCCH resource.

Based on the sixteenth aspect, in a possible implementation, the second feedback message further includes first scheduling signaling, and the first scheduling signaling indicates the communication apparatus to retransmit the uplink information in the message A, or indicates the communication apparatus to retransmit the message A.

Based on the sixteenth aspect, in a possible implementation, the transceiver module is further configured to receive second scheduling signaling from the serving network device, where the second scheduling signaling indicates the communication apparatus to initiate the random access to the target neighboring cell.

Based on the sixteenth aspect, in a possible implementation, the second scheduling signaling further includes first indication information, the first indication information indicates the communication apparatus to initiate the random access to the target neighboring cell in a first random access manner, the first random access manner includes that the communication apparatus sends the message A to the target neighboring cell, and the message A includes the preamble and the uplink information.

Based on the sixteenth aspect, in a possible implementation, the transceiver module is further configured to receive a handover command from the serving network device, where the handover command indicates the communication apparatus to hand over to the target neighboring cell.

Based on the sixteenth aspect, in a possible implementation, the communication apparatus further includes a processing module, where
the processing module is configured to determine at least one of the following: an uplink resource, an uplink transmit beam, uplink transmit power, or a TA of the target neighboring cell, where the uplink resource is used by the communication apparatus to communicate with the target neighboring cell, the uplink transmit beam is a beam used by the communication apparatus to perform uplink sending with the target neighboring cell, the uplink transmit power is power used by the communication apparatus to perform uplink sending with the target neighboring cell, and the TA of the target neighboring cell is a TA used by the communication apparatus to send an uplink signal to the target neighboring cell.

Based on the sixteenth aspect, in a possible implementation, the processing module is specifically configured to:
use a preconfigured dedicated PUCCH resource or a preconfigured CG-PUSCH resource as the uplink resource; or determine the uplink resource by using a handover command, where the handover command includes the uplink resource; or monitor, on a preconfigured time-frequency resource, third scheduling signaling sent by the neighboring-cell network device, where the third scheduling signaling indicates the uplink resource.

Based on the sixteenth aspect, in a possible implementation, the processing module is specifically configured to:
determine a path loss between the neighboring-cell network device and the communication apparatus based on a first path loss reference signal; and
determine the uplink transmit power based on the path loss.

Based on the sixteenth aspect, in a possible implementation, the processing module is specifically configured to:
use transmit power for sending the random access request by the communication apparatus as the uplink transmit power.

Based on the sixteenth aspect, in a possible implementation, if the handover command further includes an activated TCI state of the target neighboring cell, the first path loss reference signal is a path loss reference signal associated with the activated TCI state; or if the handover command further includes a deactivated TCI state of the target neighboring cell, the first path loss reference signal is an SSB associated with a random access resource used by the communication apparatus to send the random access request; or if the handover command further includes a reference signal of the target neighboring cell, the first path loss reference signal is the reference signal of the target neighboring cell.

Based on the sixteenth aspect, in a possible implementation, the handover command further includes a power control parameter associated with the activated TCI state or a power control parameter associated with the deactivated TCI state; and
the processing module is specifically configured to:
determine the uplink transmit power based on the path loss and the power control parameter.

Based on the sixteenth aspect, in a possible implementation, the processing module is specifically configured to:
if the handover command includes a TA of the target neighboring cell, use the TA in the handover command as the TA of the target neighboring cell; or
if the handover command does not include a TA of the target neighboring cell, consider, by default, that the TA of the target neighboring cell is equal to 0; or
if the handover command does not include a TA of the target neighboring cell, use the TA carried in the first feedback message or the second feedback message as the TA of the target neighboring cell; or
if the handover command includes an uplink timing advance indication, and the uplink timing advance indication indicates the communication apparatus to determine a TA of the target neighboring cell, use the TA of the target neighboring cell determined by the communication apparatus as the TA of the target neighboring cell; or
if the handover command includes a TAG ID, use a TA associated with the TAG ID as the TA of the target neighboring cell; or
if the handover command does not include a TA of the target neighboring cell, and the target neighboring cell is a current serving cell of the communication apparatus, use a TA of the serving cell as the TA of the target neighboring cell.

Based on the sixteenth aspect, in a possible implementation, the processing module is specifically configured to:
if the handover command includes a TCI state indicated by the neighboring-cell network device for the communication apparatus, determine the uplink transmit beam based on the TCI state indicated in the handover command; or
if a TCI state indicated in the handover command is a downlink TCI state, determine the uplink transmit beam based on a receive beam of an SSB associated with a random access resource used to send the preamble.

A seventeenth aspect of this application provides a communication apparatus, including:
a transceiver module, configured to: send a first feedback message to a terminal device if the communication apparatus receives a successful random access response message from a neighboring-cell network device, where the first feedback message indicates that random access initiated by the terminal device to a target neighboring cell succeeds, the target neighboring cell is a neighboring cell of a serving cell of the terminal device, and the first feedback message further indicates a PUCCH resource used by the terminal device to perform uplink transmission with the target neighboring cell; or send a second feedback message to the terminal device if the communication apparatus receives a fallback random access response message from the neighboring-cell network device, where the second feedback message indicates only that random access initiated by the terminal device to the target neighboring cell succeeds, or indicates that the terminal device successfully feeds back a preamble to the target neighboring cell.

Based on the seventeenth aspect, in a possible implementation, the second feedback message further includes first scheduling signaling, and the first scheduling signaling indicates the terminal device to retransmit uplink information in a message A, or indicates the terminal device to retransmit a message A, where the message A includes a preamble and uplink information.

Based on the seventeenth aspect, in a possible implementation, the successful random access response message includes an identifier of the PUCCH resource configured by the neighboring-cell network device for the terminal device.

Based on the seventeenth aspect, in a possible implementation, the transceiver module is further configured to send a handover command to the terminal device, where the handover command indicates the terminal device to hand over to the target neighboring cell.

Based on the seventeenth aspect, in a possible implementation, the handover command further includes a TA of the target neighboring cell, and the TA of the target neighboring cell is a TA used by the terminal device to send an uplink signal to the target neighboring cell.

Based on the seventeenth aspect, in a possible implementation, the handover command further includes an identifier of the PUCCH resource used by the terminal device to perform uplink communication with the target neighboring cell.

Based on the seventeenth aspect, in a possible implementation, the transceiver module is further configured to:
send second scheduling signaling to the terminal device, where the second scheduling signaling indicates the terminal device to initiate the random access to the target neighboring cell.

Based on the seventeenth aspect, in a possible implementation, the second scheduling signaling further includes first indication information, the first indication information indicates the terminal device to initiate the random access to the target neighboring cell in a first random access manner, the first random access manner includes that the terminal device sends the message A to the target neighboring cell, and the message A includes the preamble and the uplink information.

An eighteenth aspect of this application provides a communication apparatus, including:
a transceiver module, configured to: send a successful random access response message to a serving network device if the communication apparatus successfully receives a message A sent by a terminal device, where the message A includes a preamble and uplink information of the terminal device, where the preamble is used by the terminal device to initiate random access to a target neighboring cell, and the target neighboring cell is a neighboring cell of a serving cell of the terminal device; or send a fallback random access response message to the serving network device if the communication apparatus successfully receives only the preamble in the message A of the terminal device.

Based on the eighteenth aspect, in a possible implementation, the successful random access response message includes an identifier of a PUCCH resource configured by the communication apparatus for the terminal device.

Based on the eighteenth aspect, in a possible implementation, the transceiver module is configured to receive the message A from the terminal device.

A nineteenth aspect of this application provides a communication apparatus, including:
a transceiver module, configured to: send a message 3 to a neighboring-cell network device, where the message 3 is a message 3 used by the communication apparatus to initiate random access to a target neighboring cell, the target neighboring cell is a neighboring cell of a serving cell of the communication apparatus, and the message 3 includes an identifier of the communication apparatus; and receive a message 4 from a serving network device, where the message 4 indicates that the random access initiated by the communication apparatus to the target neighboring cell succeeds.

Based on the nineteenth aspect, in a possible implementation, the transceiver module is further configured to:
send a message 1 to the neighboring-cell network device, where the message 1 includes a first preamble of the communication apparatus; and receive a message 2 from the neighboring-cell network device or the serving network device, where the message 2 is a response to the message 1 sent by the communication apparatus to the neighboring-cell network device.

Based on the nineteenth aspect, in a possible implementation, the transceiver module is further configured to: send a message 1 to the neighboring-cell network device, where the message 1 includes a first preamble of the communication apparatus; and if the communication apparatus does not receive a message 2 from the serving network device within preset duration, retransmit the message 1 to the neighboring-cell network device; or determine a second preamble, and send the second preamble to the neighboring-cell network device.

Based on the nineteenth aspect, in a possible implementation, the communication apparatus further includes a processing module, where
the processing module is configured to determine, based on a preconfigured power ramping parameter, transmit power used to send the message 1; and
the transceiver module is specifically configured to retransmit the message 1 to the neighboring-cell network device by using the transmit power.

Based on the nineteenth aspect, in a possible implementation, the transceiver module is further configured to receive a handover command from the serving network device, where the handover command indicates the communication apparatus to hand over to the target neighboring cell.

Based on the nineteenth aspect, in a possible implementation, the communication apparatus further includes a processing module, where
the processing module is configured to determine at least one of the following: an uplink resource, an uplink transmit beam, uplink transmit power, or a TA of the target neighboring cell, where the uplink resource is used by the communication apparatus to communicate with the target neighboring cell, the uplink transmit beam is a beam used by the communication apparatus to perform uplink sending with the target neighboring cell, the uplink transmit power is power used by the communication apparatus to perform uplink sending with the target neighboring cell, and the TA of the target neighboring cell is a TA used by the communication apparatus to send an uplink signal to the target neighboring cell.

Based on the nineteenth aspect, in a possible implementation, the processing module is specifically configured to:
use a preconfigured dedicated PUCCH resource or a preconfigured CG-PUSCH resource as the uplink resource; or determine the uplink resource by using a handover command, where the handover command includes the uplink resource; or monitor, on a preconfigured time-frequency resource, first scheduling signaling sent by the neighboring-cell network device, where the first scheduling signaling indicates the uplink resource.

Based on the nineteenth aspect, in a possible implementation, the processing module is specifically configured to:
determine a path loss between the neighboring-cell network device and the communication apparatus based on a first path loss reference signal; and
determine the uplink transmit power based on the path loss.

Based on the nineteenth aspect, in a possible implementation, the processing module is specifically configured to:
use transmit power for sending the random access request by the communication apparatus as the uplink transmit power.

Based on the nineteenth aspect, in a possible implementation, if the handover command further includes an activated TCI state of the target neighboring cell, the first path loss reference signal is a path loss reference signal associated with the activated TCI state; or if the handover command further includes a deactivated TCI state of the target neighboring cell, the first path loss reference signal is an SSB associated with a random access resource used by the communication apparatus to send the random access request; or if the handover command further includes a reference signal of the target neighboring cell, the first path loss reference signal is the reference signal of the target neighboring cell.

Based on the nineteenth aspect, in a possible implementation, the handover command further includes a power control parameter associated with the activated TCI state or a power control parameter associated with the deactivated TCI state; and the processing module is specifically configured to:
determine the uplink transmit power based on the path loss and the power control parameter.

Based on the nineteenth aspect, in a possible implementation, the processing module is specifically configured to:
if the handover command includes a TA of the target neighboring cell, use the TA in the handover command as the TA of the target neighboring cell; or if the handover command does not include a TA of the target neighboring cell, consider, by default, that the TA of the target neighboring cell is equal to 0; or if the handover command does not include a TA of the target neighboring cell, use the TA carried in the message 2 as the TA of the target neighboring cell; or if the handover command includes an uplink timing advance indication, and the uplink timing advance indication indicates the communication apparatus to determine a TA of the target neighboring cell, use the TA of the target neighboring cell determined by the communication apparatus as the TA of the target neighboring cell; or if the handover command includes a TAG ID, use a TA associated with the TAG ID as the TA of the target neighboring cell; or if the handover command does not include a TA of the target neighboring cell, and the target neighboring cell is a current serving cell of the communication apparatus, use a TA of the serving cell as the TA of the target neighboring cell.

Based on the nineteenth aspect, in a possible implementation, the processing module is specifically configured to:
if the handover command includes a TCI state indicated by the neighboring-cell network device for the communication apparatus, determine the uplink transmit beam based on the TCI state indicated in the handover command; or if a TCI state indicated in the handover command is a downlink TCI state, determine the uplink transmit beam based on a receive beam of an SSB associated with a random access resource used to send the preamble.

A twentieth aspect of this application provides a communication apparatus, including:
a transceiver module, configured to: receive a message 3 from a terminal device, where the message 3 is a message 3 used by the terminal device to initiate random access to a target neighboring cell, the target neighboring cell is a neighboring cell of a serving cell of the terminal device, and the message 3 includes an identifier of the terminal device; and send a message 4 to a serving network device, where the message 4 indicates that the random access initiated by the terminal device to the target neighboring cell succeeds.

Based on the twentieth aspect, in a possible implementation, the transceiver module is further configured to:
receive a message 1 from the terminal device, where the message 1 includes a first preamble, and the first preamble is used by the terminal device to initiate the random access to the target neighboring cell; and send a message 2 to the terminal device or the serving network device, where the message 2 is a response to the message 1.

Based on the twentieth aspect, in a possible implementation, the transceiver module is further configured to:
receive first information from the serving network device, where the first information includes at least one of the following: first indication information, an index of a first SSB of the target neighboring cell, an identifier of the terminal device, or duration used for receiving the message 1, and the first indication information indicates that there is one terminal device that initiates random access to the target neighboring cell by using a random access resource associated with the first SSB.

Based on the twentieth aspect, in a possible implementation, the transceiver module is specifically configured to receive the message 1 from the terminal device based on the first information.

Based on the twentieth aspect, in a possible implementation, the identifier of the terminal device is a C-RNTI used by the terminal device in the serving cell.

A twenty-first aspect of this application provides a communication apparatus, including:
a transceiver module, configured to: receive a message 4 from a neighboring-cell network device, where the message 4 indicates that random access initiated by a terminal device to a target neighboring cell succeeds, and the target neighboring cell is a neighboring cell of a serving cell of the terminal device; and send the message 4 to the terminal device.

Based on the twenty-first aspect, in a possible implementation, the transceiver module is further configured to:
receive a message 2 from the neighboring-cell network device, where the message 2 is a response to a message 1 sent by the terminal device to the neighboring-cell network device; and send the message 2 to the terminal device.

Based on the twenty-first aspect, in a possible implementation, the transceiver module is further configured to:
send first information to the neighboring-cell network device, where the first information is used by the neighboring-cell network device to receive the message 1, and the first information includes at least one of the following: first indication information, an index of a first SSB of the target neighboring cell, an identifier of the terminal device, or duration used for receiving the message 1, where the first indication information indicates that there is one terminal device that initiates random access to the target neighboring cell by using a random access resource associated with the first SSB.

Based on the twenty-first aspect, in a possible implementation, the transceiver module is further configured to:
send a handover command to the terminal device, where the handover command indicates the terminal device to hand over to the target neighboring cell. In this way, the terminal device initiates the random access to the target neighboring cell.

Based on the twenty-first aspect, in a possible implementation, the handover command further includes a TA of the target neighboring cell, and the TA of the target neighboring cell is a TA used by the terminal device to send an uplink signal to the target neighboring cell.

Based on the twenty-first aspect, in a possible implementation, the handover command further includes an identifier of a PUCCH resource used by the terminal device to perform uplink communication with the target neighboring cell.

A twenty-second aspect of this application provides a communication apparatus. The communication apparatus includes a processor and a memory. The memory stores a computer program or computer instructions, and the processor is configured to invoke and run the computer program or the computer instructions stored in the memory, so that the processor implements any one of the implementations of the first aspect to the twelfth aspect.

Optionally, the communication apparatus further includes a transceiver, and the processor is configured to control the transceiver to receive or send a signal.

A twenty-third aspect of this application provides a communication apparatus. The communication apparatus includes a processor. The processor is configured to invoke a computer program or computer instructions in a memory, so that the processor implements any one of the implementations of the first aspect to the twelfth aspect.

Optionally, the communication apparatus further includes a transceiver, and the processor is configured to control the transceiver to receive or send a signal.

A twenty-fourth aspect of this application provides a communication apparatus. The communication apparatus includes a processor, and the processor is configured to perform any one of the implementations of the first aspect to the twelfth aspect.

A twenty-fifth aspect of this application provides a computer program product including instructions. When the computer program product runs on a computer, the computer is enabled to perform any one of the implementations of the first aspect to the twelfth aspect.

A twenty-sixth aspect of this application provides a computer-readable storage medium, including computer instructions. When the instructions are run on a computer, the computer is enabled to perform any one of the implementations of the first aspect to the twelfth aspect.

A twenty-seventh aspect of this application provides a chip apparatus, including a processor, configured to invoke a computer program or computer instructions in a memory, so that the processor performs any one of the implementations of the first aspect to the twelfth aspect.

Optionally, the processor is coupled to the memory through an interface.

A twenty-eighth aspect of this application provides a communication system. The communication system includes the communication apparatus shown in the thirteenth aspect, the communication apparatus shown in the fourteenth aspect, and the communication apparatus shown in the fifteenth aspect; or the communication system includes the communication apparatus shown in the sixteenth aspect, the communication apparatus shown in the seventeenth aspect, and the communication apparatus shown in the eighteenth aspect; or the communication system includes the communication apparatus shown in the nineteenth aspect, the communication apparatus shown in the twentieth aspect, and the communication apparatus shown in the twenty-first aspect.

It can be learned from the foregoing technical solutions that embodiments of this application have the following advantages:
It can be learned from the foregoing technical solutions that the terminal device sends the random access request to the neighboring-cell network device. The random access request is used to initiate the random access to the target neighboring cell, and the target neighboring cell is the neighboring cell of the serving cell of the terminal device. The terminal device retransmits the random access request to the neighboring-cell network device if the terminal device does not receive the feedback message from the serving network device for the random access request, or the terminal device receives at least one of the following from the serving network device: the first feedback message or the first scheduling signaling, where the first feedback message indicates that the random access of the terminal device fails, and the first scheduling signaling indicates the terminal device to retransmit the random access request. It can be learned that, after the terminal device sends the random access request to the neighboring-cell network device, the terminal device may wait for the feedback message from the serving network device for the random access request. It can be learned that the terminal device does not need to wait for the response from the neighboring-cell network device for the random access request, but waits for the feedback message of the serving network device for the random access request, thereby helping reduce a service interruption time of the terminal device in the serving cell. Further, if the terminal device does not receive the feedback message from the serving network device for the random access request, or the terminal device receives at least one of the following from the serving network device: the first feedback message or the first scheduling signaling, the terminal device may retransmit the random access request to the neighboring-cell network device. In this way, the terminal device may determine, based on the feedback status of the serving network device, whether the random access succeeds. Therefore, in the technical solutions of this application, the terminal device can determine the access status of the random access while reducing the service interruption time of the terminal device in the serving cell.

### BRIEF DESCRIPTION OF DRAWINGS

FIG. 1 is a diagram of a communication system according to an embodiment of this application;
FIG. 2 is another diagram of a communication system according to an embodiment of this application;
FIG. 3 is a diagram of a scenario to which a communication method is applicable according to an embodiment of this application;
FIG. 4 is a diagram of a contention-based random access procedure according to an embodiment of this application;
FIG. 5 is a diagram of a contention-free random access procedure according to an embodiment of this application;
FIG. 6 is a diagram of an embodiment of a communication method according to an embodiment of this application;
FIG. 7 is a diagram of a scenario of a communication method according to an embodiment of this application;
FIG. 8 is a diagram of another embodiment of a communication method according to embodiments of this application;
FIG. 9 is a diagram of still another embodiment of a communication method according to an embodiment of this application;
FIG. 10 is a diagram of a structure of a communication apparatus according to an embodiment of this application;
FIG. 11 is a diagram of another structure of a communication apparatus according to an embodiment of this application;
FIG. 12 is a diagram of still another structure of a communication apparatus according to an embodiment of this application;
FIG. 13 is a diagram of still another structure of a communication apparatus according to an embodiment of this application;
FIG. 14 is a diagram of still another structure of a communication apparatus according to an embodiment of this application; and
FIG. 15 is a diagram of still another structure of a communication apparatus according to an embodiment of this application.

### DESCRIPTION OF EMBODIMENTS

Embodiments of this application provides a communication method and a related apparatus, so that a terminal device determines, based on a feedback status of a serving network device, whether random access initiated by the terminal device to a target neighboring cell succeeds. In this way, the terminal device can determine an access status of the random access while reducing a service interruption time of the terminal device in a serving cell.

The following describes technical solutions of this application with reference to accompanying drawings.

The technical solutions in this application may be applied to various communication systems, for example, a 5G system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after the 5G network, and a vehicle-to-everything (vehicle-to-everything, V2X) communication system.

The communication system to which this application is applicable includes a terminal device, a serving network device, and a candidate network device.

The terminal device is located in a serving cell. A signal transmitted by the serving network device covers a serving cell of the terminal device, and the serving network device is configured to provide a service for a terminal device in the serving cell. The candidate network device is a network device to hand over, a signal transmitted by the candidate network device covers a candidate cell, and the candidate network device is configured to provide a service for a terminal device in the candidate cell. In this application, the candidate network device is described by using a neighboring-cell network device as an example. A signal transmitted by the neighboring-cell network device covers a target neighboring cell, and the target neighboring cell is a neighboring cell of the serving cell of the terminal device. The neighboring-cell network device is configured to provide a service for the terminal device of the target neighboring cell.

The following describes the terminal device and the network device in this application.

The terminal device may be a wireless terminal device that can receive scheduling and indication information of the network device. The terminal device may be a device that provides a user with voice and/or data connectivity, a handheld device having a wireless connection function, or another processing device connected to a wireless modem.

The terminal device is also referred to as user equipment (user equipment, UE), a mobile station (mobile station, MS), a mobile terminal (mobile terminal, MT), a customer-premises equipment (customer-premises equipment, CPE), or the like. The terminal device is a device that includes a wireless communication function (providing a user with voice/data connectivity), for example, a handheld device or a vehicle-mounted device having a wireless connection function. Currently, some examples of terminal devices are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in the internet of vehicles, a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. For example, the wireless terminal in self-driving may be an unmanned aerial vehicle, a helicopter, or an airplane. For example, the wireless terminal in the internet of vehicles may be a vehicle-mounted device, a vehicle equipment, a vehicle-mounted module, a vehicle, or a ship; the wireless terminal in industrial control may be a camera, a robot, or a robot arm; and the wireless terminal in smart home may be a television, an air conditioner, a sweeper, a speaker, or a set-top box.

It should be noted that the terminal device may alternatively be a chip, a module, or a control unit in the foregoing possible devices or apparatuses. This is not specifically limited in this application.

The network device may be a device in a wireless network. For example, the network device may be a device that is deployed in a radio access network and that provides a wireless communication function for the terminal device. For example, the network device may be a radio access network (radio access network, RAN) node that enables the terminal device to access the wireless network, and may also be referred to as an access network device, a RAN entity, an access node, a network node, or a communication apparatus.

Specifically, the network device may be an access network device of a cellular system related to the 3rd generation partnership project (3rd generation partnership project, 3GPP), for example, a 4G communication system or a 5G communication system. Alternatively, the network device may be an access network device in an open radio access network (open RAN, O-RAN, or ORAN) or a cloud radio access network (cloud radio access network, CRAN). Alternatively, the network device may be an access network device in a communication system obtained by integrating the foregoing two or more communication systems.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a macro base station, a micro base station, a radio relay node, a donor node, a radio controller in a CRAN scenario, a wireless backhaul node, a transmission point (transmission point, TP), a transmission reception point (transmission reception point, TRP), or the like. Alternatively, the network device may be a network device in a 5G mobile communication system, for example, a next generation NodeB (next generation NodeB, gNB), a TRP, or a TP in an NR system, or one or one group of antenna panels (including a plurality of antenna panels) of a base station in a 5G mobile communication system. Alternatively, the network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, in a remote radio unit (remote radio unit, RRU), an active antenna processing unit (active antenna unit, AAU), or a remote radio head (remote radio head, RRH). Alternatively, the network device may be a server, a wearable device, a vehicle, a vehicle-mounted device, or the like. For example, an access network device in a V2X technology may be a road side unit (road side unit, RSU).

It should be noted that, in different systems, the CU (or the CU-CP and the CU-UP), the DU, or the RU may have different names, but a person skilled in the art may understand meanings of the names. For example, in the ORAN system, the CU may also be referred to as an O-CU or an open CU, the DU may also be referred to as an O-DU, the CU-CP may also be referred to as an O-CU-CP, the CU-UP may also be referred to as an O-CU-UP, and the RU may also be referred to as an O-RU. This is not specifically limited in this application. Any one of the CU, the CU-CP, the CU-UP, the DU, and the RU in this application may be implemented by using a software module, a hardware module, or a combination of a software module and a hardware module.

Optionally, for the network elements in the ORAN system, each network element may implement a protocol layer function shown in Table 1.

**Table 1**

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol (packet data convergence protocol user plane, PDCP-U) |
| O-DU | Radio link control (radio link control, RLC), medium access control (medium access control, MAC), and high physical layer (PHY-high) |
| O-RU | Low physical layer (PHY-low) |

The following describes architectures of a CU and a DU of an access network device. The access network device includes at least one CU and at least one DU. Optionally, the access network device further includes at least one RU.

The following uses an example in which the access network device includes one CU and one DU for description. The CU has some functions of a core network, and the CU may include a CU-CP and a CU-UP. The CU and the DU may be configured based on a protocol layer function of a wireless network implemented by the CU and the DU. For example, the CU is configured to implement functions of a packet data convergence protocol (packet data convergence protocol, PDCP) layer and a protocol layer above the PDCP layer (for example, an RRC layer and/or an SDAP layer). The DU is configured to implement a function of a protocol layer below the PDCP layer (for example, an RLC layer, a MAC layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

When the CU includes a CU-CP and a CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element configured to implement a control plane function in a core network. The network element configured to implement the control plane function in the core network may be an access and mobility function network element, for example, an access and mobility function (access and mobility management function, AMF) in a 5G system. The access and mobility function network element is configured to be responsible for mobility management in a mobile network, for example, location update of a terminal device, network registration of the terminal device, and handover of the terminal device. The CU-UP may interact with a network element configured to implement a user plane function in the core network. The network element configured to implement the user plane function in the core network, for example, a user plane function (User Plane Function, UPF) in the 5G system, is configured to forward and receive data in the terminal device.

The foregoing configurations of the CU and the DU are merely examples. Alternatively, functions of the CU and the DU may be configured depending on a requirement. For example, the CU or the DU may be configured to have functions of more protocol layers, or the CU or the DU may be configured to have some processing functions of a protocol layer. For example, some functions of the RLC layer and functions of a protocol layer above the RLC layer are set on the CU, and remaining functions of the RLC layer and functions of a protocol layer below the RLC layer are set on the DU. For another example, functions of the CU or the DU may alternatively be obtained through division based on a service type or another system requirement. For example, division is performed based on a latency. In this case, functions whose processing time needs to satisfy a latency requirement are disposed on the DU, and functions whose processing time does not need to satisfy the latency requirement are disposed on the CU.

The DU and the RU may work together to jointly implement functions of the PHY layer. One DU may be connected to the one or more RUs. Functions of the DU and the RU may be configured in a plurality of manners according to a design. For example, the DU is configured to implement a baseband function, and the RU is configured to implement an intermediate radio frequency function. For another example, the DU is configured to implement higher-layer functions of the PHY layer, and the RU is configured to: implement lower-layer functions of the PHY layer, or implement the lower-layer functions and a radio frequency function. The higher-layer functions of the physical layer may include some functions of the physical layer, and these functions are closer to the MAC layer. The lower-layer functions of the physical layer may include other functions of the physical layer, and these functions are closer to an intermediate radio frequency side.

It should be noted that the network device may be the foregoing device or apparatus, or may be a component (for example, a chip), a module, or a unit in the foregoing device or apparatus. This is not specifically limited in this application.

In this application, a target neighboring cell and a serving cell may be cells on two DUs connected to one CU, or may be two cells on one DU connected to one CU, or may be cells on DUs respectively connected to two CUs. This is not specifically limited in this application.

If the target neighboring cell and the serving cell are cells on DUs respectively connected to two CUs, the CUs communicate with each other through an Xn interface, and the CU communicates with the DU through an F1-AP interface. If the target neighboring cell and the serving cell are cells on two DUs connected to one CU, the DUs communicate with each other through an Fl-AP interface.

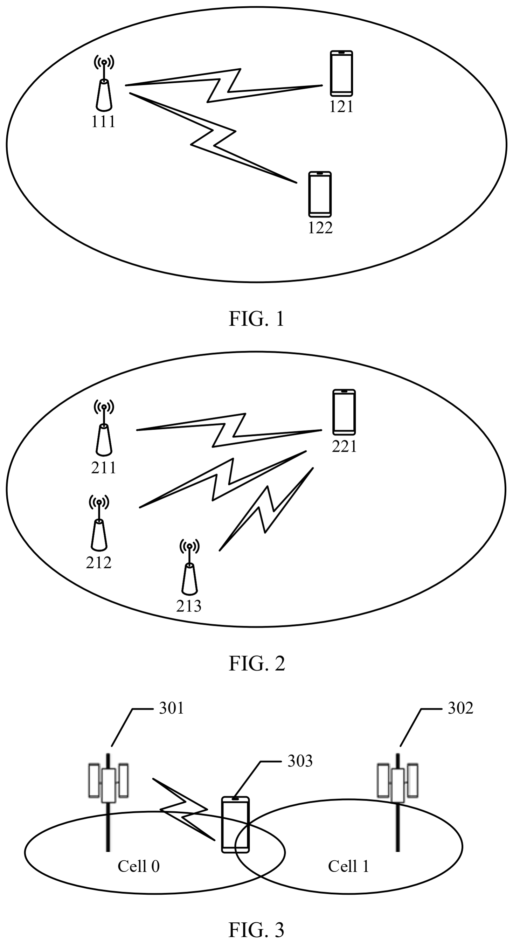

For ease of understanding of the technical solutions in embodiments of this application, the following shows, with reference to FIG. 1 and FIG. 2, two possible communication systems to which the method provided in embodiments of this application is applicable.

FIG. 1 is a diagram of a communication system according to an embodiment of this application. As shown in FIG. 1, the communication system includes at least one network device, for example, a network device 111 shown in FIG. 1. The communication system further includes at least one terminal device, for example, a terminal device 121 and a terminal device 122 shown in FIG. 1. The network device 111 may perform transmission with the terminal device 121 and the terminal device 122 by using beams.

FIG. 2 is another diagram of a communication system according to an embodiment of this application. As shown in FIG. 2, the communication system may include at least two network devices, for example, a network device 211, a network device 212, and a network device 213 shown in FIG. 2. The communication system further includes at least one terminal device, for example, a terminal device 221 shown in FIG. 2. The terminal device 221 may be provided with communication services by a plurality of network devices. For example, as shown in FIG. 2, the network device 211 may perform transmission with the terminal device 221 by using a beam 1, the network device 212 may perform transmission with the terminal device 221 by using a beam 2, and the network device 213 may perform transmission with the terminal device 221 by using a beam 3. In other words, one terminal device may be provided with communication services by a plurality of network devices simultaneously.

The following describes a possible scenario to which this application is applicable. This application is also applicable to other scenarios, and a scenario in the following example does not constitute a limitation on this application.

FIG. 3 is a diagram of a scenario to which a communication method is applicable according to an embodiment of this application. Refer to FIG. 3. The communication system includes a TRP 301, a TRP 302, and a terminal device 303. A cell 0 is a serving cell of the terminal device 303, and a cell 1 is a neighboring cell of the serving cell of the terminal device 303. The TRP 301 provides a communication service for the terminal device 303. The terminal device 303 may initiate random access to the TRP 302 by using the communication method provided in this application. This helps the cell 1 to calculate a TA of the cell 1 and send the TA to the cell 0. The cell 0 may add the TA to a handover command, and send the handover command to the terminal device, so as to obtain the TA of the cell 1 before the terminal device 303 hands over to the cell 1, thereby reducing a service interruption time of the terminal device 303 in the cell 0.

To facilitate understanding of the technical solutions in this application, the following describes some technical terms used in this application.
1. Beam (beam): The beam is a communication resource. The beam may be a wide beam, a narrow beam, or another type of beam, and a technology for forming the beam may be a beamforming technology or another technical means. The beamforming technology may be specifically a digital beamforming technology, an analog beamforming technology, and a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-co-location, QCL) information, a QCL assumption, a QCL indication, or the like. The beam may be indicated by a TCI-state parameter or a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state or a downlink TCI-state), a spatial relation, or the like. The foregoing terms are also equivalent to each other. Alternatively, the beam may be replaced with another term for representing the beam. This is not limited in this application.

A transmit end may send same information or different information by using different beams. Optionally, a plurality of beams having a same or similar communication feature may be considered as one beam. One beam may include one or more antenna ports, configured to transmit a data channel, a control channel, a sounding signal, and the like. An uplink transmit beam may be indicated by using any one of a spatial relation, a TCI-state, and a sounding reference signal (sounding reference signal, SRS) resource (indicating a transmit beam using the SRS). Therefore, the uplink transmit beam may alternatively be replaced with the SRS resource.

A beam for sending a signal may be referred to as a transmit beam (transmit beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting).

A beam for receiving a signal may be referred to as a receive beam (receive beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

For example, the transmit beam may be signal strength distribution formed in different directions in space after a signal is transmitted through an antenna, and the receive beam may be signal strength distribution in different directions in space of a radio signal received from an antenna. It may be understood that the one or more antenna ports forming one beam may alternatively be considered as one antenna port set.

When a low-frequency band or an intermediate-frequency band is used, the transmit end may send signals in an omnidirectional manner or sent at a wide angle. When a high-frequency band is used, because of a small carrier wavelength in a high-frequency communication system, an antenna array including many antenna elements may be disposed at the transmit end and a receive end. The transmit end sends a signal by using a specific beamforming weight, so that the sent signal forms a spatially directional beam, and the receive end receives the signal by using the antenna array by using a specific beamforming weight. This helps increase received power of signals at the receive end and resist a path loss.

2. Common beam: Currently, each channel is indicated through an independent beam. Each channel has a corresponding beam. In this application, a common beam is defined, and is used for a plurality of uplink and/or downlink channels.

The common beam is a same beam used for a plurality of channels, a plurality of types of channels, a plurality of reference signals, and/or a plurality of types of reference signals. The channel includes but is not limited to at least one of the following: a physical downlink control channel (physical downlink control channel, PDCCH), a PDSCH, a PUCCH, a physical uplink shared channel (physical uplink shared channel, PUSCH), or a physical random access channel (physical random access channel, PRACH). The reference signal includes but is not limited to at least one of an SSB, a CSI-RS, a DMRS, a phase tracking reference signal (phase tracking reference signal, PTRS), a time-frequency tracking reference signal (tracking reference signal, TRS), an SRS, or the like.

Joint (joint) common beam: The joint common beam is for transmission of at least one uplink-downlink channel or at least one uplink-downlink reference signal, for example, a PDCCH, a PDSCH, a PUCCH, and a PUSCH. The joint common beam may also be referred to as an uplink-downlink common beam.

Uplink common beam: The uplink common beam is for transmission of a plurality of uplink channels, and/or transmission of a plurality of types of uplink channels, and/or transmission of one or more uplink reference signals, for example, a PUCCH, a PUSCH, and an SRS.

Downlink common beam: The downlink common beam is for transmission of a plurality of downlink channels, and/or transmission of a plurality of types of downlink channels, and/or transmission of one or more downlink reference signals, for example, a PDCCH, a PDSCH, and channel state information reference signal (channel state information reference signal, CSI-RS).

Form of the common beam: The common beam may have a newly defined structure (different from an existing TCI-state). For example, the common beam includes beam indication related information, including but not limited to one or more of the following: a common beam identifier (identifier, ID), a logical cell identifier (cell ID), a physical cell identifier, a bandwidth part identifier, a reference signal resource for determining a beam, a QCL type, an uplink power control related parameter (such as a path loss measurement reference signal resource, p0, or a closed loop index (closed Loop Index)), and an identifier of a path loss reference signal.

Application scope of the common beam: The common beam may be cell-specific, that is, one common beam is for transmission of a plurality of channels in one cell. The common beam may be bandwidth part (bandwidth path, BWP)-specific, and is for transmission of a plurality of beams in one BWP. The common beam may also be cross-cell, that is, is for transmission of a plurality of channels of a plurality of cells. The plurality of cells may be a plurality of cells in one band (band). The plurality of cells may alternatively be a plurality of inter-band cells.

3. Quasi-co-location (quasi-co-location, QCL): A quasi-co-location relationship indicates that a plurality of resources have one or more same or similar communication features. Same or similar communication configurations may be used for the plurality of resources having the quasi-co-location relationship. For example, if two antenna ports have a quasi-co-location relationship, a large-scale channel characteristic of transmitting one symbol by one port may be deduced from a large-scale channel characteristic of transmitting one symbol by the other port. The large-scale characteristic may include delay spread, an average delay, Doppler spread, a Doppler frequency shift, an average gain, a reception parameter, a receive beam number of the terminal device, transmission/reception channel correlation, a receive angle of arrival, spatial correlation of a receiver antenna, a dominant angle of arrival (angle of arrival, AoA), an average angle of arrival, AoA spread, and the like. Specifically, a co-location indication indicates whether at least two groups of antenna ports have a co-location relationship, including: The co-location indication indicates whether channel state information reference signals sent by the at least two groups of antenna ports are from a same transmission point, or the co-location indication indicates whether channel state information reference signals sent by the at least two groups of antenna ports are from a same beam group.

4. TCI mode: The TCI mode includes a joint (joint) mode and a separate (separate) mode. The joint mode means that a same beam is used for both uplink transmission and downlink transmission between a TRP and a terminal device. The separate mode means that different beams are used for uplink transmission between a TRP and a terminal device and downlink transmission between the TRP and the terminal device.

5. TCI: The TCI may also be referred to as a TCI state (TCI-State). As specified in a communication protocol, QCL is configured by using the TCI state. A parameter of the TCI state is used to configure a quasi-co-location relationship between one or two downlink reference signals and a demodulation reference signal (demodulation reference signal, DMRS) of a physical downlink shared channel (physical downlink shared channel, PDSCH). A downlink control information (downlink control information, DCI) may include a TCI field, and the TCI field is a field that is in the DCI and that indicates quasi-co-location of a PDSCH antenna port.

The TCI is configured by the network device for the terminal device by using an RRC message, and is referred to as a TCI state in configuration signaling. After the network device configures TCI states for the terminal device by using the RRC message, the network device may send a MAC CE to the terminal device. The MAC is used to activate one or more TCI states in the TCI states configured by the network device for the terminal device. Optionally, the network device may further send DCI to the terminal device. The DCI indicates one TCI state in the TCI states activated by the MAC CE.

The TCI state includes one or two QCL relationships. The QCL relationship represents a specific consistency relationship between a signal/channel to be received currently and a previously known reference signal. If there is a QCL relationship, the terminal device may receive or send an upcoming signal/channel by inheriting a reception or transmission parameter used for previously receiving or sending a reference signal. Each TCI state is corresponding to one beam. The terminal device may perform communication transmission by using the beam.

A type of the TCI state includes an uplink transmission configuration indicator (uplink transmission configuration indicator, UL TCI) state, a downlink transmission configuration indicator (downlink transmission configuration indicator, DL TCI) state, and an uplink-downlink joint TCI state. The UL TCI state corresponds to an uplink common beam, the DL TCI state corresponds to a downlink common beam, and the uplink-downlink joint TCI state corresponds to an uplink-downlink joint common beam. For the uplink common beam, the downlink common beam, and the uplink-downlink joint common beam, refer to the foregoing related descriptions.

The following describes TCI state configuration, activation, and indication.

TCI state configuration: The network device configures a plurality of TCI states for the terminal device by using RRC signaling. Each of these TCI states includes quasi-co-location information (QCL-Info) whose type is typeD (typeD). The reference signal of typeD is determined by using the quasi-co-location information of typeD. For ease of description, the reference signal of typeD is referred to as a reference signal of typeD in the TCI state in the following. In addition, the TCI state further includes another type of quasi-co-location information, and the quasi-co-location information may be typeA, typeB, or typeC. For example, quasi-co-location information of typeA further includes an identifier of a reference signal, and the terminal device determines, based on a Doppler shift, a Doppler spread, an average delay, and a delay spread of receiving the reference signal, a parameter for receiving another signal or channel. For each reference signal configured in the quasi-co-location information, the network device may further configure a serving cell identifier and a bandwidth part (BWP) identifier of the reference signal. The TCI state may further include a power control parameter and a path loss reference signal identifier that are used by the terminal device to perform uplink transmission by using the TCI state.

The TCI state configuration is a TCI state configuration indicated by the network device to the terminal device in a scenario in which the terminal device uses the joint mode. When the terminal device uses the joint mode, the network device indicates the uplink-downlink joint TCI state to the terminal device.

If the terminal device uses the separate mode, the network device indicates the UL TCI state to the terminal device. The configuration of the UL TCI state includes a configuration of a reference signal. For example, the reference signal is an SSB, a channel state information reference signal (channel state information reference signal, CSI-RS), or an SRS. In the following description, the reference signal is referred to as a resource reference signal in the UL TCI state. If the reference signal is an SSB or a CSI-RS, the terminal device may determine, by using a beam for receiving the SSB or the CSI-RS, a beam used for uplink sending. Then, the terminal device performs uplink transmission with the network device by using the beam used for uplink sending. If the reference signal is an SRS, the terminal device may perform uplink transmission with the network device by using a beam for sending the SRS. The SRS is further associated with a TCI state, and the TCI state includes a configuration of a downlink periodic reference signal. The terminal device determines, based on a beam used by the terminal device to receive the downlink periodic reference signal, a beam used to send the SRS, and then sends the SRS by using the beam.

TCI state activation: After configuring the plurality of TCI states, the network device further needs to activate eight TCI states in the TCI states by using the MAC CE. The eight TCI states are in one-to-one correspondence with eight values of the TCI field in the DCI. In other words, specific eight TCI states corresponding to the eight values of the TCI field in the DCI are determined by using the MAC CE.

TCI state indication: The network device indicates a specific TCI-state through the TCI field in the DCI. For example, a value of the TCI field in the DCI sent by the network device to the terminal device is 000, indicating that a TCI state corresponding to 000 is used for the data transmit beam. A reference signal included in quasi-co-location information (quasi-co-location information, QCL-Info) whose type is typeD in the TCI state is a channel state information reference signal (channel state information reference signal, CSI-RS) whose index is #1, indicating that a beam used for data transmission is the same as a receive beam corresponding to the CSI-RS whose index is #1. The receive beam corresponding to the CSI-RS whose index is #1 may be determined through a beam measurement procedure, and is known to the terminal device. Therefore, the terminal device may determine, based on a specific value of the TCI field, a beam corresponding to the data transmit beam, to send or receive data by using the corresponding receive beam.

It should be noted that the two descriptions: the TCI-state and the TCI state in this specification may be interchanged.

6. Random access resource: The random access resource is used by the terminal device to initiate random access to the network device. The random access resource is formed by several random access occasions (RACH occasion, RO). When initiating random access, the terminal device first detects an SSB with maximum received signal strength. The terminal device determines the random access occasion based on a quantity of SSBs sent by the network device (the terminal device learns of the quantity of SSBs by using a system message broadcast by the network device) and an association configuration of the SSB in a configuration of the random access resource. Then, the terminal device initiates random access to the network device by using the random access occasion. The SSB is briefly referred to as an SSB associated with the random access resource in the following. A resource for sending the SSB is referred to as an SSB resource, and the SSB resource may be briefly referred to as an SSB resource associated with the random access resource.

7. Serving cell: The serving cell is a cell on which the terminal device camps. The terminal device may perform communication transmission with the serving cell.

8. Target neighboring cell: The target neighboring cell is a cell whose physical cell identifier (physical cell identifier, PCI) is different from a PCI of a serving cell of the terminal device. For example, the target neighboring cell is a cell adjacent to the serving cell, or the target neighboring cell and the serving cell are two cells covered by a same site.

9. TA of the target neighboring cell: The TA of the target neighboring cell is a timing advance used by the terminal device to send an uplink signal to the target neighboring cell.

10. Control resource set: The control resource set indicates a frequency domain resource set for physical downlink control channel transmission, is a parameter configuration unit for the physical downlink control channel transmission, and includes a related configuration parameter of a physical downlink control channel.

11. Search space: The search space indicates a time domain location set for physical downlink control channel transmission and time-frequency locations corresponding to a plurality of physical downlink control channel resources in the search space. For example, the search space defines a physical downlink control channel transmission periodicity, namely, a periodicity of a physical downlink control channel occasion in the search space. A physical downlink control channel may be actually understood as a detection point or a detection time period of the physical downlink control channel in time domain. For example, a time unit is a slot, and one physical downlink control channel transmission periodicity includes P slots. Further, the search space indicates an offset value, for example, S, of a start slot of the physical downlink control channel transmission periodicity. In this case, one physical downlink control channel transmission periodicity corresponds to one time window, a number of a start slot is S+P*n, and a number of an end slot is S+P*(n+1)-1, where n is a positive integer, and P is a positive integer. Further, the search space indicates consecutive slots in which there is a physical downlink control channel occasion and that are in the physical downlink control channel transmission periodicity, and symbols on which there is a physical downlink control channel occasion and that are in these slots.

Random access is a necessary process of establishing a radio link between the terminal device and the network device. Communication transmission can be normally performed between the terminal device and the network device only after the random access succeeds. The terminal device may implement uplink synchronization with the network device in a random access procedure. That is, the terminal device may obtain a TA of a cell that the terminal device requests to access, and perform uplink transmission with the cell by using the TA. Further, in the random access procedure, the network device may allocate a unique identifier to the terminal device, for example, a C-RNTI.

Currently, a type of the random access procedure includes a contention-based random access procedure and a contention-free random access procedure.

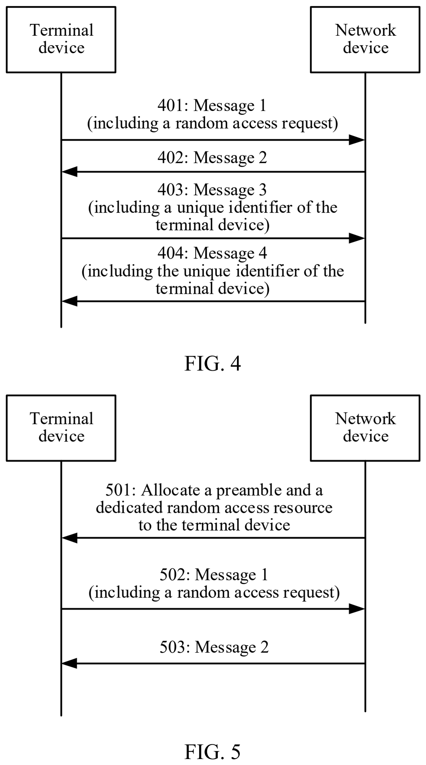

The following describes a contention-based random access procedure with reference to FIG. 4. FIG. 4 is a diagram of a contention-based random access procedure according to an embodiment of this application. Refer to FIG. 4. The method includes the following steps.

401: A terminal device sends a message 1 (message 1, MSG 1) to a network device. The message 1 includes a random access request.

Specifically, the random access request includes a preamble and a random access network temporary identifier (random access-RNTI, RA-RNTI) of the terminal device, and the preamble is used by the terminal device to request to access a target neighboring cell. The RA-RNTI of the terminal device is generated by the terminal device according to a formula or rule predefined in a communication protocol.

402: The network device sends a message 2 to the terminal device. The message 2 may also be referred to as a random access response (random access response, RAR).

After sending the message 1, the terminal device monitors a PDCCH in a RAR time window, to receive a RAR of a corresponding RA-RNTI. If the RAR with which the network device replies is not received in the RAR time window, it is considered that current random access fails.

After the terminal device successfully receives a RAR (the terminal device decodes the RAR by using the RA-RNTI of the terminal device), if an index of a preamble in the RAR is the same as an index of the preamble sent by the terminal device in the random access request, it is considered that the terminal device successfully receives the RAR. In this case, the terminal device may stop monitoring the RAR.

403: The terminal device sends a message 3 to the network device.

The message 3 includes a unique identifier of the terminal device. The unique identifier is used for conflict resolution in step 404.

For a terminal device in an RRC connected mode, a unique identifier of the terminal device is a C-RNTI.

For a terminal device in an RRC non-connected mode, a unique identifier of the terminal device is an identifier that uniquely identifies the terminal device from a core network, for example, a system architecture evolution temporary mobile subscriber identity (system architecture evolution temporary mobile subscriber identity, S-TMSI), or a random number. In this case, the network device needs to first communicate with the core network, so that the network device can respond to, in step 404, the message 3 sent by the terminal device.

404: The network device sends a message 4 to the terminal device.

The message 4 carries a unique identifier of the terminal device, indicating that the terminal device wins in a conflict resolution process, that is, the terminal device successfully performs random access.

Specifically, in the contention-based random access procedure, a plurality of terminal devices may send random access requests on a same resource. Therefore, the random access requests conflict. When the network device determines to respond to one of the terminal devices, it indicates that conflict resolution occurs for the terminal device.

It should be noted that, if the message 4 carries a unique identifier of another terminal device, it indicates that random access of the terminal device fails, and the terminal device needs to re-initiate random access.

In a handover scenario, the network device may configure a dedicated random access resource for the terminal device. For the terminal device, the terminal device does not need to undergo a conflict resolution (contention resolution) process. A type of the random access procedure may be referred to as a contention-free random access (contention free random access, CFRA) procedure.

The following describes a contention-free random access procedure with reference to FIG. 5. FIG. 5 is a diagram of a contention-free random access procedure according to an embodiment of this application. Refer to FIG. 5. The method includes the following steps.

501: A network device allocates a preamble and a dedicated random access resource to a terminal device.

It can be learned that the network device allocates the preamble and the dedicated random access resource to the terminal device in advance, so that the terminal device can subsequently identify a terminal device that sends a random access request.

502: The terminal device sends a message 1 to the network device.

The message 1 includes a random access request. Specifically, the random access request includes the preamble allocated by the network device to the terminal device in step 501. The terminal device may send the message 1 to the terminal device by using the dedicated random access resource allocated by the network device to the terminal device in step 501.

503: The network device sends a message 2 to the terminal device.

Specifically, the network device may calculate, based on the preamble in the message 1 in step 502, a TA of a cell that the terminal device requests to access. Then, the network device adds the TA to the message 2, and sends the message 2 to the terminal device.

Optionally, the network device allocates an uplink resource to the terminal device, to perform uplink transmission between the terminal device and the network device.

Optionally, the message 2 includes information about the uplink resource.

As described in the embodiment shown in FIG. 5, random access of the terminal device is completed by using a two-step random access procedure. In the embodiment shown in FIG. 5, the terminal device performs random access by using the preamble and the dedicated random access resource that are allocated by the network device. This may be understood as a contention-free random access procedure. In actual application, step 501 may alternatively be replaced with that the terminal device selects a preamble and a random access resource. In this case, the embodiment shown in FIG. 5 may be understood as a contention-based random access (contention based random access, CBRA) procedure.

When the terminal device performs cell handover, the terminal device cannot receive data or information from a serving cell. As a result, a service of the serving cell of the terminal device is interrupted. To reduce a service interruption time of the terminal device in the serving cell, it is agreed in a standard that before the terminal device performs cell handover, the terminal device obtains in advance a TA of the terminal device in a cell to which the terminal device is to hand over. Specifically, the terminal device is located in a serving cell, and the terminal device may initiate random access to the cell to which the terminal device is to hand over. A specific random access procedure includes: The terminal device sends a preamble to the cell to which the terminal device is to hand over. Then, the terminal device waits to receive a response message from the cell to which the terminal device is to hand over for the preamble, where the response message includes a TA of the terminal device in the cell to which the terminal device is to hand over.

However, in the random access procedure, the terminal device cannot continue to communicate with the serving cell. Therefore, a service of the serving cell is interrupted. To further reduce a service interruption time of the terminal device in the serving cell, the following solution is proposed: After sending the preamble, the terminal device does not need to wait to receive the response message from the cell to which the terminal device is to hand over. The serving cell may obtain the TA of terminal device in the cell from the cell to which the terminal device is to hand over, and send the TA to the terminal device by using a handover command.

However, if the terminal device does not wait to receive the response message from the cell to which the terminal device is to hand over for the preamble, the terminal device cannot determine whether random access of the terminal device succeeds. In this way, the terminal device can determine an access status of the random access while reducing a service interruption time of the terminal device in a serving cell.

Further, even if the serving cell discovers the random access of the terminal device, the serving cell re-triggers the terminal device to initiate random access. The terminal device cannot learn that the random access request is retransmitted. Therefore, the terminal device does not increase power for sending the random access request. As a result, the random access of the terminal device fails because transmit power for sending the random access request by the terminal device is insufficient.

This application provides a corresponding technical solution, so that a terminal device determines, based on a feedback status of a serving network device, whether random access initiated by the terminal device to a target neighboring cell succeeds. In this way, the terminal device can determine an access status of the random access while reducing a service interruption time of the terminal device in a serving cell.

The technical solutions of this application are described below with reference to specific embodiments.

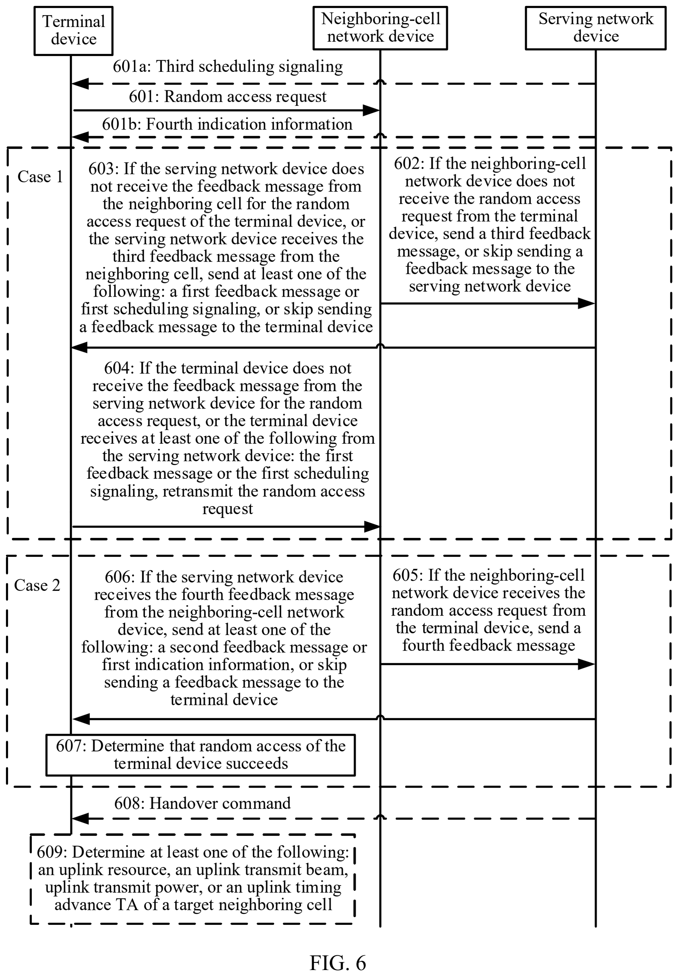

FIG. 6 is a diagram of an embodiment of a communication method according to an embodiment of this application. Refer to FIG. 6. The method includes the following steps.

601: A terminal device sends a random access request to a neighboring-cell network device.

The random access request is used by the terminal device to request to access a target neighboring cell. The target neighboring cell is a neighboring cell of a serving cell of the terminal device. The neighboring-cell network device corresponds to the target neighboring cell, a signal transmitted by the neighboring-cell network device covers the target neighboring cell, and the neighboring-cell network device provides a service for the terminal device in the target neighboring cell.

For example, as shown in FIG. 3, a terminal device 303 is located in a serving cell (cell 0). The target neighboring cell is a cell 1, and the neighboring-cell network device is a TRP 302. A signal transmitted by the TRP 302 covers the cell 1, and provides a service for the cell 1.

The following describes the technical solutions of this application with reference to a receiving status of receiving the random access request by the neighboring-cell network device.

Specifically, the receiving case of receiving the random access request by the neighboring-cell network device includes case 1 and case 2. Case 1 is that the neighboring-cell network device does not receive the random access request from the terminal device. Case 2: The neighboring-cell network device receives the random access request from the terminal device.

The following describes case 1 with reference to step 602 to step 604.

602: If the neighboring-cell network device does not receive the random access request from the terminal device, the neighboring-cell network device sends a third feedback message to a serving network device, or the neighboring-cell network device does not send a feedback message to the serving network device.

The third feedback message indicates that the neighboring-cell network device does not receive the random access request from the terminal device. Alternatively, the third feedback message indicates that random access initiated by the terminal device to the target neighboring cell fails.

Optionally, that the neighboring-cell network device does not receive the random access request from the terminal device includes any one of the following:
The neighboring-cell network device does not receive the random access request from the terminal device in a first time window specified in a protocol or in a preset first time window.

Alternatively, the neighboring-cell network device does not receive the random access request from the terminal device before a preset first timer expires.

Optionally, a length of the first time window specified in the protocol or a length of the preset first time window may be one or more random access channel resource periods.

603: If the serving network device does not receive the feedback message from the neighboring-cell network device for the random access request of the terminal device, or the serving network device receives the third feedback message from the neighboring-cell network device, the serving network device sends at least one of the following to the terminal device: a first feedback message or first scheduling signaling; or the serving network device does not send a feedback message to the terminal device.

The first feedback message indicates that the random access of the terminal device fails. The first scheduling signaling is used to schedule the terminal device to retransmit the random access request.

Optionally, that the serving network device does not receive the feedback message from the neighboring-cell network device for the random access request of the terminal device includes any one of the following:
The serving network device does not receive the feedback message from the neighboring-cell network device for the random access request in a second time window specified in a protocol or in a preset second time window.

Alternatively, the neighboring-cell network device does not receive the feedback message from the neighboring-cell network device for the random access request before a preset second timer expires.

If the serving network device does not receive the feedback message from the neighboring-cell network device for the random access request of the terminal device, or the serving network device receives the third feedback message from the neighboring-cell network device, the serving network device performs any one of the following implementations:
Implementation 1: The serving network device sends the first feedback message to the terminal device. That is, the serving network device feeds back, to the terminal device, that the random access of the terminal device fails.

Optionally, the first feedback message includes a power ramping parameter. For example, the power ramping parameter includes a power ramping value or a power ramping step. If the terminal device retransmits the random access request for a plurality of times, the terminal device needs to accumulate the power ramping step each time, that is, transmit power for sending the random access request each time is increased by the power ramping step compared with transmit power for sending the random access request last time.

Implementation 2: The serving network device sends the first scheduling signaling to the terminal device.

Optionally, the first scheduling signaling includes second indication information, and the second indication information indicates the terminal device to retransmit the random access request. Therefore, the terminal device can distinguish, by using the second indication information, whether the random access request is retransmitted or initially transmitted.

Optionally, the first scheduling signaling further includes at least one of the following: third indication information or a power ramping parameter.

The third indication information indicates the terminal device whether to increase power for sending the random access request.

For example, the power ramping parameter includes a power ramping value or a power ramping step.

In a possible implementation, if the third indication information indicates the terminal device to increase the power for sending the random access request, the terminal device may increase, according to a preset rule, the power for sending the random access request by the terminal device. Alternatively, the third indication information further includes a power ramping parameter. The terminal device retransmits the random access request based on the power ramping parameter.

In this implementation, the serving network device may indirectly indicate, by using the power ramping parameter, the terminal device to retransmit the random access request.

Optionally, the first scheduling signaling includes first resource configuration information, and the first resource configuration information is used by the terminal device to retransmit the random access request. For example, the first resource configuration information includes a random access channel (random access channel, RACH) resource of the target neighboring cell that is used by the terminal device to retransmit the random access request.

Implementation 3: The serving network device does not send the feedback message to the terminal device.

In this implementation, the terminal device may monitor the feedback message from the serving network device. If no feedback message from the serving network device is detected within a specific time, the terminal device may determine that the random access of the terminal device fails.

It can be learned that the terminal device does not need to wait for a response from the neighboring-cell network device for the random access request, but waits for the feedback message of the serving network device for the random access request, thereby helping reduce a service interruption time of the terminal device in the serving cell. Specifically, the terminal device does not need to monitor the response from the neighboring-cell network device for the random access request in a corresponding time window by using a preconfigured resource.

604: If the terminal device does not receive the feedback message from the serving network device for the random access request, or the terminal device receives at least one of the following from the serving network device: the first feedback message or the first scheduling signaling, the terminal device retransmits the random access request.

Optionally, that the terminal device does not receive the feedback message from the serving network device for the random access request includes: The terminal device does not receive the feedback message from the serving network device for the random access request within a preset time.

In a possible implementation, the terminal device retransmits the random access request to the neighboring-cell network device based on a preconfigured quantity of retransmission times and/or a preconfigured power ramping parameter.

In this implementation, the serving network device may preconfigure the quantity of retransmission times and/or the power ramping parameter for the terminal device in advance. For example, the terminal device may increase transmit power based on the power ramping parameter, and retransmit the random access request by using the transmit power.

In another possible implementation, the first feedback message or the first scheduling signaling further includes a power ramping parameter. The terminal device retransmits the random access request to the neighboring-cell network device based on the power ramping parameter.

After step 604, the serving network device may re-attempt to receive the feedback message from the neighboring-cell network device for the random access request retransmitted by the terminal device. Then, the serving network device may send a corresponding feedback to the terminal device based on a feedback status of the neighboring-cell network device.

The following describes case 2 with reference to step 605 to step 607.

605: If the neighboring-cell network device receives the random access request from the terminal device, the neighboring-cell network device sends a fourth feedback message to the serving network device.

The fourth feedback message indicates that the neighboring-cell network device successfully receives the random access request.

Optionally, the fourth feedback message includes at least one of the following: a TA of the target neighboring cell, an identifier allocated by the target neighboring cell to the terminal device, or an uplink resource allocated by the target neighboring cell to the terminal device.

After the neighboring-cell network device receives the random access request of the terminal device, the neighboring-cell network device may calculate the TA of the target neighboring cell based on a preamble carried in the random access request. The neighboring-cell network device may further allocate a C-RNTI and an uplink resource to the terminal device. The C-RNTI is an identifier of the terminal device in the target neighboring cell. The uplink resource is used by the neighboring-cell network device to perform uplink transmission with the terminal device.

606: If the serving network device receives the fourth feedback message from the neighboring-cell network device, the serving network device sends at least one of the following to the terminal device: a second feedback message or first indication information, or the serving network device does not send a feedback message to the terminal device.

The second feedback message indicates that the random access of the terminal device succeeds. The first indication information indicates the terminal device not to retransmit the random access request to the neighboring-cell network device.

In this implementation, the serving network device sends the first indication information to the terminal device, to indirectly indicate that the random access of the terminal device succeeds.

607: The terminal device determines, based on the second feedback message, that the random access of the terminal device succeeds.

It can be learned that, according to the technical solution of this application, the terminal device may determine an access status of the random access of the terminal device based on a feedback status of the serving network device.

It should be noted that a random access procedure used between the terminal device and the neighboring-cell network device in this embodiment may be the random access procedure shown in FIG. 5, that is, a contention-free random access procedure.

Optionally, the embodiment shown in FIG. 6 further includes step 601a. Step 601a may be performed before step 601.

601a: The serving network device sends third scheduling signaling to the terminal device. Correspondingly, the terminal device receives the third scheduling signaling from the serving network device.

The third scheduling signaling is used to schedule the terminal device to initiate the random access to the target neighboring cell.

Optionally, the third scheduling signaling includes second resource configuration information. The second resource configuration information is used by the terminal device to initially transmit the random access request.

For example, the second resource configuration information includes an RACH resource of the target neighboring cell that is used by the terminal device to initially transmit the random access request. Correspondingly, step 601 specifically includes: The terminal device sends the random access request to the neighboring-cell network device by using the RACH resource.

Optionally, the first resource configuration information in the first scheduling signaling and the second resource configuration information may be the same, and indirectly indicate the network device to schedule the terminal device to retransmit the random access request by using the first scheduling signaling.

Optionally, the third scheduling signaling is carried in DCI. The DCI further indicates whether a feedback message for the random access request of the terminal device exists. For example, the DCI includes a first field, and when a value of the first field is 1, it indicates that a feedback message for the random access request of the terminal device exists, and the terminal device needs to wait for the feedback message. If the value of the first field is 0, it indicates that a feedback message for the random access request of the terminal device does not exist, and the terminal device does not need to wait for the feedback message. Therefore, the terminal device may continue to communicate with the serving network device. This embodiment mainly describes a solution in which the first field indicates that a feedback message for the random access request of the terminal device does not exist.

When the DCI further indicates that a feedback message for the random access request of the terminal device exists, the DCI further indicates the terminal device to wait to receive the feedback message from the neighboring-cell network device or the serving network device for the random access request. For example, the DCI includes a second field, and when a value of the second field is 1, the terminal device is indicated to wait to receive the feedback message from the neighboring-cell network device for the random access request. When the value of the second field is 0, the terminal device is indicated to wait to receive the feedback message from the serving network device for the random access request. This embodiment mainly describes a solution in which the terminal device waits to receive the feedback message from the serving network device for the random access request.

Optionally, the embodiment shown in FIG. 6 further includes step 601b. Step 601b may be performed before step 601.

601b: The serving network device sends fourth indication information to the terminal device. Correspondingly, the terminal device receives the fourth indication information from the serving network device.

The fourth indication information indicates the terminal device not to wait for a feedback message from the neighboring-cell network device for the random access request.

In this implementation, whether the terminal device waits for the feedback message from the neighboring-cell network device for the random access may be configured by the serving network device. In this way, whether the terminal device waits for the feedback message from the neighboring-cell network device for the random access request is flexibly configured. If the serving network device configures the terminal device to wait for the neighboring-cell network device, the solution shown in the background is performed.

Optionally, the embodiment shown in FIG. 6 further includes step 608 and step 609. Step 608 and step 609 may be performed after step 604 or step 607.

608: The serving network device sends a handover command to the terminal device. Correspondingly, the terminal device receives the handover command from the serving network device.

The handover command indicates the terminal device to hand over to the target neighboring cell.

609: The terminal device determines at least one of the following: an uplink resource, an uplink transmit beam, uplink transmit power, or a TA of the target neighboring cell.

The uplink resource is used by the terminal device to perform uplink transmission with the target neighboring cell. The uplink resource includes a PUSCH resource and/or a PUCCH resource. The uplink transmit beam is a beam used by the terminal device to perform uplink sending with the target neighboring cell. The uplink transmit power is power used by the terminal device to perform uplink sending with the target neighboring cell. The TA of the target neighboring cell is a TA used by the terminal device to send an uplink signal to the target neighboring cell.

The following describes several possible implementations in which the terminal device determines the uplink resource.

Implementation 1: The terminal device uses a preconfigured dedicated PUCCH resource or a preconfigured CG-PUSCH resource as the uplink resource.

Implementation 2: The terminal device determines the uplink resource by using a handover command, where the handover command includes the uplink resource.

Implementation 3: The terminal device monitors, on a preconfigured time-frequency resource, second scheduling signaling sent by the neighboring-cell network device, where the second scheduling signaling indicates the uplink resource.

In the implementation 3, when no uplink resource is preconfigured for the terminal device, the terminal device monitors, on the preconfigured time-frequency resource, the second scheduling signaling sent by the neighboring-cell network device.

Optionally, the preconfigured time-frequency resource is determined by the terminal device based on a specific search space and a specific control resource set. Optionally, the specific search space and the specific control resource set may be configured by the serving network device for the terminal device during cell handover of the terminal device, or may be all search spaces and control resource sets configured by the serving network device for the terminal device. This is not specifically limited in this application.

Optionally, the terminal device sends at least one of the following to the neighboring-cell network device by using the uplink resource: indication information 1, a measurement result 1, a measurement result 2, or an index of a beam of the target neighboring cell that has been tracked or activated by the terminal device.

The indication information 1 indicates that the terminal device has hand over to the neighboring-cell network device. The measurement result 1 includes a measurement result obtained by the terminal device by measuring a reference signal sent by the serving cell. For example, the measurement result 1 includes an identifier of the reference signal sent by the serving cell and signal strength of the reference signal. The measurement result 2 includes a measurement result obtained by the terminal device by measuring a reference signal sent by the target neighboring cell. For example, the measurement result 2 includes an identifier of the reference signal sent by the target neighboring cell and signal strength of the reference signal.

Optionally, that the terminal device determines the uplink transmit power specifically includes step a to step c.

Step a: The terminal device determines a first path loss reference signal.

The following describes several possible implementations of step a.

Implementation 1: If the handover command further includes an activated TCI state of the target neighboring cell, the first path loss reference signal is a path loss reference signal associated with the activated TCI state.

It can be learned from the foregoing description that a TCI state may include a path loss reference signal identifier, that is, the TCI state includes an associated path loss reference signal. The first path loss reference signal may be the path loss reference signal associated with the activated TCI state.

Optionally, there is a QCL relationship between a reference signal resource of typeD in the activated TCI state and a random access resource used by the terminal device to send the random access request. Alternatively, the path loss reference signal associated with the activated TCI state is an SSB associated with a random access resource used by the terminal device to send the random access request. Alternatively, there is a QCL relationship between a resource used to send the path loss reference signal associated with the activated TCI state and an SSB resource associated with the random access resource.

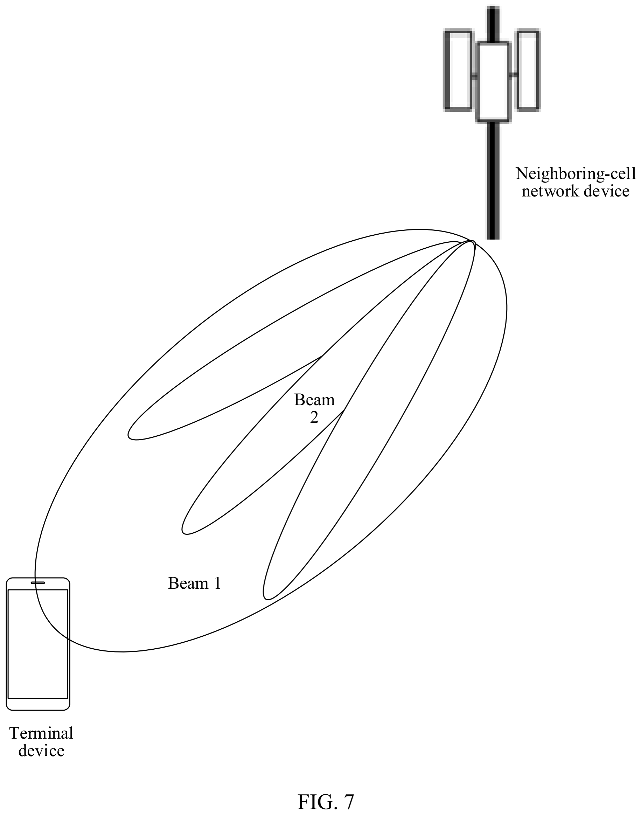

For example, as shown in FIG. 7, a receive beam used by the terminal device to receive the SSB associated with the random access resource from the neighboring-cell network device is a beam 1 shown in FIG. 7. The beam 1 is a wide beam. A beam corresponding to the activated TCI state is a beam 2, and the beam 2 is a narrow beam and belongs to the beam 1.

Implementation 2: If the handover command further includes a deactivated TCI state of the target neighboring cell, the first path loss reference signal is an SSB associated with a random access resource used by the terminal device to send the random access request.

Implementation 3: If the handover command further includes a reference signal of the target neighboring cell, the first path loss reference signal is the reference signal of the target neighboring cell.

Step b: The terminal device determines a path loss between the neighboring-cell network device and the terminal device based on the first path loss reference signal.

Specifically, the terminal device measures the first path loss reference signal to obtain receive power for receiving the first path loss reference signal by the terminal device. The neighboring-cell network device may notify the terminal device in advance of transmit power for sending the first path loss reference signal by the neighboring-cell network device. The terminal device determines the path loss between the terminal device and the network device by using the transmit power and the receive power. That is, the path loss between the neighboring-cell network device and the terminal device is equal to the transmit power minus the receive power.

Step c: The terminal device determines the uplink transmit power based on the path loss reference signal.

Optionally, the handover command further includes a power control parameter associated with the activated TCI state or a power control parameter associated with the deactivated TCI state. Step c specifically includes: The terminal device determines the uplink transmit power based on the path loss and the power control parameter.

Optionally, the terminal device performs uplink transmission with the neighboring-cell network device based on the path loss. Specifically, after the terminal device determines the path loss between the terminal device and the neighboring-cell network device based on the first path loss reference signal, the terminal device compensates for an uplink signal based on the path loss (that is, increases transmit power of the uplink signal with reference to the path loss), and sends the uplink signal to the neighboring-cell network device. In this way, power for receiving the uplink signal on a side of the neighboring-cell network device is ensured, so that the neighboring-cell network device parses the uplink signal, thereby improving communication performance.

The following describes several possible implementations in which the terminal device determines the uplink transmit beam.

Implementation 1: If the handover command includes a TCI state indicated by the neighboring-cell network device for the terminal device, the terminal device determines the uplink transmit beam based on the TCI state indicated in the handover command.

Optionally, there is a QCL relationship between a reference signal resource of typeD in the TCI state indicated in the handover command and an SSB resource associated with a random access resource used by the terminal device to send the random access request.

Implementation 2: If a TCI state indicated in the handover command is a downlink TCI state, the terminal device determines the uplink transmit beam based on a receive beam of an SSB associated with a random access resource used to send the random access request.

Specifically, the terminal device uses a spatial filter parameter for receiving the SSB by the terminal device as a spatial filter parameter used to send the uplink signal.

The following describes several possible implementations in which the terminal device determines the TA of the target neighboring cell.

Implementation 1: If the handover command includes a TA of the target neighboring cell, the terminal device uses the TA in the handover command as the TA of the target neighboring cell.

Implementation 2: If the handover command does not include a TA of the target neighboring cell, the terminal device considers, by default, that the TA of the target neighboring cell is equal to 0.

Implementation 3: If the handover command does not include a TA of the target neighboring cell, the terminal device uses the TA carried in the second feedback message as the TA of the target neighboring cell.

Optionally, if a first condition is met, the terminal device uses the TA carried in the second feedback message as the TA of the target neighboring cell. The first condition includes any one of the following:
There is a QCL relationship between a reference signal resource of typeD in the TCI state indicated in the handover command and an SSB resource associated with a random access resource used by the terminal device to send the random access request.

Alternatively, the path loss reference signal associated with the TCI state indicated in the handover command is an SSB associated with a random access resource used by the terminal device to send the random access request.

Alternatively, there is a QCL relationship between a resource used for sending the path loss reference signal associated with the TCI state indicated in the handover command and an SSB associated with a random access resource used by the terminal device to send the random access request.

Implementation 4: If the handover command includes an uplink timing advance indication, and the uplink timing advance indication indicates the terminal device to determine a TA of the target neighboring cell, the terminal device uses the TA of the target neighboring cell determined by the terminal device as the TA of the target neighboring cell.

Implementation 5: If the handover command includes a TAG ID, the terminal device uses a TA associated with the TAG ID as the TA of the target neighboring cell.

Optionally, the TAG ID is associated with at least one serving cell before the terminal device hands over, and therefore the TA associated with the TAG ID is a TA of the at least one serving cell. The TA of the at least one serving cell is used as a timing advance used by the terminal device to send an uplink signal to the at least one serving cell.

Optionally, the TAG ID is associated with one TRP connected before the terminal device hands over, and therefore the TA associated with the TAG ID is a TA associated with the TRP. That is, the terminal device sends the uplink signal to the TRP by using the TA associated with the TRP.

Optionally, the TAG ID is associated with at least one reference signal that is configured in the serving cell before the terminal device hands over and that is measured by the terminal device. The reference signal may be an SSB, a CSI-RS, or a path loss reference signal (path loss reference signal, PL-RS).

Implementation 6: If the handover command does not include a TA of the target neighboring cell, and the target neighboring cell is a current serving cell of the terminal device, the terminal device stores the TA of the target neighboring cell. The terminal device may determine the TA of the target neighboring cell.

The implementation 6 is mainly applied to a carrier aggregation (carrier aggregation, CA) scenario. The serving cell of the terminal device may include a plurality of component carriers (component carrier, CC), which may be specifically a primary CC and a secondary CC. The target neighboring cell may be one of the serving cells, that is, the terminal device switches the secondary CC to the primary CC.

It can be learned from the foregoing technical solution that the terminal device does not need to wait for a response from the neighboring-cell network device for the random access request, but waits for the feedback message of the serving network device for the random access request, thereby helping reduce a service interruption time of the terminal device in the serving cell. Further, if the terminal device does not receive the feedback message from the serving network device for the random access request, or the terminal device receives at least one of the following from the serving network device: the first feedback message or the first scheduling signaling, the terminal device may retransmit the random access request to the neighboring-cell network device. In this way, the terminal device may determine, based on the feedback status of the serving network device, whether the random access of the terminal device succeeds. Therefore, in the technical solution of this application, the terminal device can determine the access status of the random access while reducing the service interruption time of the terminal device in the serving cell.

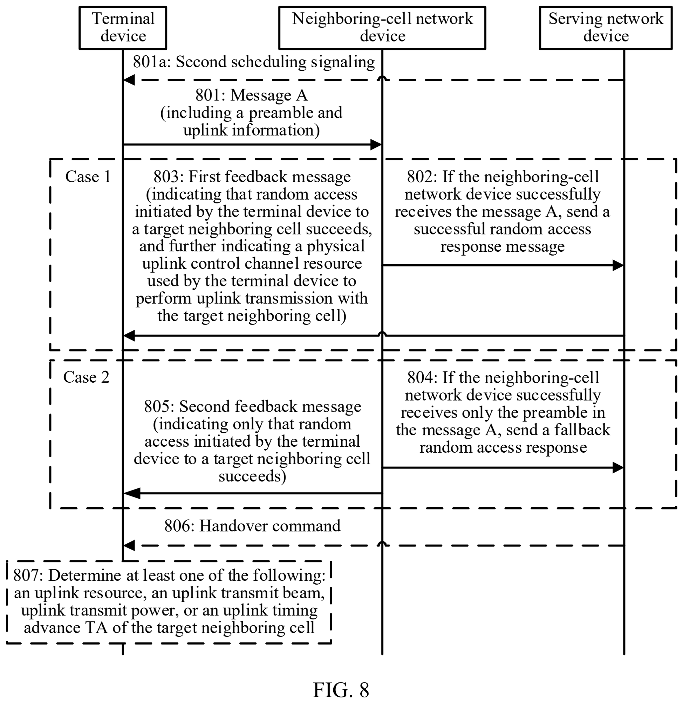

FIG. 8 is a diagram of another embodiment of a communication method according to an embodiment of this application. Refer to FIG. 8. The method includes the following steps.

801: A terminal device sends a message A to a neighboring-cell network device. The message A includes a preamble and uplink information.

The preamble is used by the terminal device to initiate random access to a target neighboring cell.

The target neighboring cell is a neighboring cell of a serving cell of the terminal device, and the neighboring-cell network device corresponds to the target neighboring cell. A signal transmitted by the neighboring-cell network device covers the target neighboring cell, and is used to provide a service for the target neighboring cell.

Optionally, the uplink information is carried on a PUSCH.

Optionally, the uplink information includes an identifier of the terminal device, for example, a C-RNTI used by the terminal device in the serving cell.

Further, optionally, the uplink information includes an identifier of a reference signal with best or better signal quality of the target neighboring cell, where the reference signal is obtained by the terminal device through measurement, or an index of a beam of the target neighboring cell that has been tracked or activated by the terminal device.

Optionally, the embodiment shown in FIG. 8 further includes step 801a. Step 801a may be performed before step 801.

801a: The terminal device sends second scheduling signaling to the neighboring-cell network device.

The second scheduling signaling indicates the terminal device to initiate the random access to the target neighboring cell.

In a possible implementation, the second scheduling signaling further includes first indication information. The first indication information indicates the terminal device to initiate the random access to the target neighboring cell in a first random access manner. The first random access manner includes that the terminal device sends the message A to the target neighboring cell, where the message A includes the preamble and the uplink information. That is, the terminal device further sends the uplink information in a process of sending a random access request.

In another possible implementation, the terminal device preconfigures a random access resource used to send the preamble and a resource used to send the uplink information. Therefore, after the terminal device receives the second scheduling signaling, the terminal device initiates the random access to the target neighboring cell in the first random access manner by default.

The following describes the technical solutions of this application with reference to a receiving status of receiving the message A by the neighboring-cell network device.

Case 1: The neighboring-cell network device successfully receives the message A sent by the terminal device. Case 2: The neighboring-cell network device successfully receives only the preamble in the message A of the terminal device. That is, the neighboring-cell network device fails to receive the uplink information.

The following describes case 1 with reference to step 802 and step 803.

802: If the neighboring-cell network device successfully receives the message A, the neighboring-cell network device sends a successful random access response (successful RAR) message to a serving network device.

In this implementation, the neighboring-cell network device successfully receives the preamble and the uplink information in the message A.

Optionally, the successful random access response message includes an identifier of a PUCCH resource configured by the neighboring-cell network device for the terminal device. The PUCCH resource is used by the terminal device to send a reference signal to the target neighboring cell after the terminal device hands over to the target neighboring cell.

Optionally, the successful random access response message further includes a TA of the target neighboring cell. Specifically, after the neighboring-cell network device receives the message A, the neighboring-cell network device may calculate the TA of the target neighboring cell based on the preamble in the message A, and feed back the TA to the serving network device by using the successful random access response message.

803: The serving network device sends a first feedback message to the terminal device. The first feedback message indicates that the random access initiated by the terminal device to the target neighboring cell succeeds, and further indicate a PUCCH resource used by the terminal device to perform uplink transmission with the target neighboring cell.

The PUCCH resource is used by the terminal device to send a reference signal to the target neighboring cell after the terminal device hands over to the target neighboring cell.

Optionally, the first feedback message further includes a TA of the target neighboring cell.

The following describes case 2 with reference to step 804 and step 805.

804: If the neighboring-cell network device successfully receives only the preamble in the message A, the neighboring-cell network device sends a fallback random access response (fallback RAR) message to the serving network device.

In this implementation, the neighboring-cell network device successfully receives only the preamble in the message A, but fails to receive the uplink information.

805: The serving network device sends a second feedback message to the terminal device. The second feedback message indicates only that the random access initiated by the terminal device to the target neighboring cell succeeds, or indicates that the terminal device successfully feeds back the preamble to the target neighboring cell.

Optionally, the second feedback message further includes first scheduling signaling, and the first scheduling signaling indicates the terminal device to retransmit the uplink information in the message A, or indicates the terminal device to retransmit the message A.

In this implementation, because the neighboring-cell network device fails to receive the preamble in the message A, the serving network device may trigger the terminal device to retransmit the message A or the uplink information in the message A.

Optionally, the second feedback message further includes at least one of the following: an identifier of a PUCCH resource configured by the neighboring-cell network device for the terminal device, or a TA of the target neighboring cell.

Optionally, the embodiment shown in FIG. 8 further includes step 806 and step 807. Step 806 and step 807 may be performed after step 803 or step 805.

806: The serving network device sends a handover command to the terminal device.

807: The terminal device determines at least one of the following: an uplink resource, an uplink transmit beam, uplink transmit power, or a TA of the target neighboring cell.

Step 806 and step 807 are similar to step 608 and step 609 in the embodiment shown in FIG. 6. For details, refer to the related descriptions of step 608 and step 609 in the embodiment shown in FIG. 6.

It should be noted that the random access procedure shown in FIG. 5 may be used between the terminal device and the neighboring-cell network device in this embodiment, that is, a contention-free random access procedure. A contention-based random access procedure may alternatively be used between the terminal device and the neighboring-cell network device, that is, a random access procedure similar to that in the embodiment shown in FIG. 5. A difference lies in that the preamble and the random access resource in step 501 in the embodiment shown in FIG. 5 are selected by the terminal device.

In this embodiment of this application, the terminal device sends the message A to the neighboring-cell network device, where the message A includes the preamble and the uplink information, and the preamble is used by the terminal device to initiate the random access to the target neighboring cell. The terminal device receives the first feedback message from the serving network device, where the first feedback message indicates that the random access initiated by the terminal device to the target neighboring cell succeeds, and the first feedback message further indicates the physical uplink control channel resource used by the terminal device to perform uplink communication with the target neighboring cell; or the terminal device receives the second feedback message from the serving network device, where the second feedback message indicates only that the random access initiated by the terminal device to the target neighboring cell succeeds, or indicates that the terminal device successfully feeds back the preamble to the target neighboring cell. It can be learned that the terminal device does not need to wait for a response from the neighboring-cell network device for the message A, but waits for the feedback message of the serving network device for the message A, thereby helping reduce a service interruption time of the terminal device in the serving cell. Further, if the terminal device receives the first feedback message or the second feedback message from the serving network device, the terminal device may determine whether the random access of the terminal device succeeds. In other words, the terminal device may determine, based on a feedback status of the serving network, whether the random access succeeds. Therefore, in the technical solution of this application, the terminal device can determine a status of the random access while reducing the service interruption time of the terminal device in the serving cell.

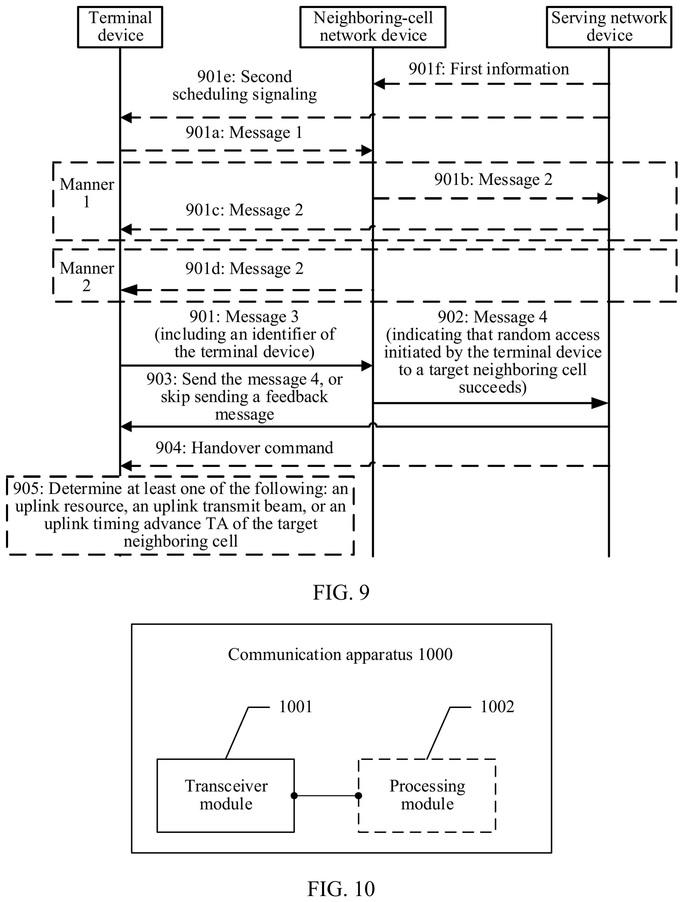

FIG. 9 is a diagram of another embodiment of a communication method according to an embodiment of this application. Refer to FIG. 9. The method includes the following steps.

901: A terminal device sends a message 3 to a neighboring-cell network device. The message 3 includes an identifier of the terminal device.

The message 3 is a message 3 used by the terminal device to initiate random access to a target neighboring cell. The target neighboring cell is a neighboring cell of a serving cell of the terminal device, the neighboring-cell network device corresponds to the target neighboring cell, a signal transmitted by the neighboring-cell network device covers the target neighboring cell, and the neighboring-cell network device is configured to provide a service for the terminal device in the target neighboring cell.

Optionally, the identifier of the terminal device is an identifier used by the terminal device in the serving cell of the terminal device, for example, a C-RNTI used by the terminal device in the serving cell.

Before step 901, a serving network device may indicate an identifier of the terminal device to the neighboring-cell network device, to notify the neighboring-cell network device in advance that the terminal device is to initiate the random access to the target neighboring cell. Therefore, after the neighboring-cell network device receives the message 3, the neighboring-cell network device determines, based on the identifier of the terminal device carried in the message 3 and the identifier indicated by the serving network device, whether to request access for the terminal device indicated by the serving network device. The serving network device corresponds to a serving cell, and a signal transmitted by the serving network device covers the serving cell. The serving network device is configured to provide a service for the terminal device in the serving cell.

902: The neighboring-cell network device sends a message 4 to the serving network device. The message 4 indicates that the random access initiated by the terminal device to the target neighboring cell succeeds.

In this embodiment, a random access procedure used between the terminal device and the neighboring-cell network device in this embodiment may be the random access procedure shown in FIG. 4, that is, a contention-based random access procedure. Therefore, the neighboring-cell network device selects a terminal device that successfully performs random access, and indicates the terminal device by using the message 4.

Optionally, the message 4 includes an identifier of the terminal device, for example, an identifier used by the terminal device in a serving cell of the terminal device, for example, a C-RNTI used by the terminal device in the serving cell. It indicates that the terminal device wins in a conflict resolution process, that is, the terminal device successfully performs random access in the contention-based random access procedure.

Optionally, the message 4 includes a TA of the target neighboring cell.

903: The serving network device sends the message 4 to the terminal device. Correspondingly, the terminal device receives the message 4 from the serving network. Alternatively, the serving network device does not send a feedback message to the terminal device.

Optionally, after the terminal device receives the message 4, the terminal device may determine that the random access of the terminal device succeeds.

Optionally, before step 901, the embodiment shown in FIG. 9 further includes step 901a. Step 901a may be performed before step 901.

901a: The terminal device sends a message 1 to the neighboring-cell network device. Correspondingly, the neighboring-cell network device receives the message 1 from the terminal device.

The message 1 includes a first preamble, where the first preamble is used by the terminal device to initiate the random access to the target neighboring cell.

Specifically, the terminal device sends the message 1 on a specified random access resource. Correspondingly, the neighboring-cell network device monitors the message 1 from the terminal device on the random access resource. Optionally, the neighboring-cell network device monitors the message 1 from the terminal device on the random access resource in a preset time window or duration that is indicated by the serving network device and that is used to receive the message 1.

Optionally, the embodiment shown in FIG. 9 further includes step 901e. Step 901e may be performed before step 901a.

901e: The serving network device sends second scheduling signaling to the terminal device. Correspondingly, the terminal device receives the second scheduling signaling from the serving network device.

The second scheduling signaling indicates the terminal device to initiate the random access to the target neighboring cell.

Optionally, the second scheduling signaling includes a random access resource, and the random access resource is used by the terminal device to send the message 1.

Optionally, the embodiment shown in FIG. 9 further includes step 901f, and step 901f may be performed before step 901a.

901f: The serving network device sends first information to the neighboring-cell network device. Correspondingly, the neighboring-cell network device receives the first information from the serving network device.

The first information is used by the neighboring-cell network device to receive the message 1.

Optionally, the first information includes at least one of the following: first indication information, an index of a first SSB of the target neighboring cell, an identifier of the terminal device, or duration used for receiving the message 1. The first indication information indicates that there is a terminal device that initiates random access to the target neighboring cell by using a random access resource associated with the first SSB.

It can be learned from the foregoing descriptions of the related terms of the random access resource that each random access resource is associated with one SSB, that is, an SSB is associated with a corresponding random access resource. Therefore, the serving network device may indicate the index of the first SSB to the neighboring-cell network device, to indicate the random access resource used to send the message 1.

For the identifier of the terminal device, refer to the related descriptions in step 901.

It should be noted that step 901e and step 901f are not subject to a fixed execution sequence. Step 901e may be performed before step 901f; or step 901f may be performed before step 901e; or step 901e and step 901f are simultaneously performed depending on a situation. This is not specifically limited in this application.

For the message 1, the following describes two possible feedback manners.

The following describes a manner 1 with reference to step 901b and step 901c. Optionally, the embodiment shown in FIG. 9 further includes step 901b and step 901c. Step 901b and step 901c may be performed after step 901a.

901b: The neighboring-cell network device sends a message 2 to the serving network device. Correspondingly, the serving network device receives the message 2 from the neighboring-cell network device.

The message 2 is a response to the message 1. The message 2 indicates whether the neighboring-cell network device receives the first preamble.

For the message 2, refer to the related descriptions of step 402 in the embodiment shown in FIG. 4.

901c: The serving network device sends the message 2 to the terminal device. Correspondingly, the terminal device sends the message 2 to the serving network device.

If the message 2 indicates that the neighboring-cell network device successfully receives the first preamble, the terminal device performs step 901. If the message 2 indicates that the neighboring-cell network device fails to receive the first preamble, the serving network device may trigger the terminal device to retransmit the message 1. For related descriptions of retransmitting the message 1 by the terminal device, refer to the foregoing descriptions.

It should be noted that, if the terminal device does not receive the message 2 from the serving network device within preset duration or a preconfigured time window, the terminal device retransmits the message 1 to the neighboring-cell network device, that is, the terminal device continues to initiate the random access to the target neighboring cell by using the first preamble. Alternatively, the terminal device determines a second preamble, and sends the second preamble to the neighboring-cell network device.

Optionally, the message 2 includes an identifier of the target neighboring cell.

In this implementation, when the terminal device separately sends the message 1 to a plurality of neighboring cells in a relatively short time, and the neighboring-cell network device responds to the message 1 of the target neighboring cell, the message 2 needs to carry the identifier of the target neighboring cell. This helps the terminal device determine that the message 2 is the response from the target neighboring cell for the message 1.

Optionally, the preset duration may be a sum of duration of a time domain receive window (ra-ResponseWindow) for receiving a random access response in a configuration of the random access resource and supplementary duration, and the supplementary duration is used to compensate for transition duration caused by a process in which the neighboring-cell network device sends the message 2 to the terminal device by using the serving network device.

Optionally, the terminal device retransmits the message 1 to the neighboring-cell network device based on a preconfigured quantity of retransmission times and/or a preconfigured power ramping parameter.

For example, the terminal device determines, based on the preconfigured power ramping parameter, transmit power used to retransmit the message 1, and retransmits the message 1 to the neighboring-cell network device by using the transmit power.

The following describes a manner 2 with reference to step 901d. Optionally, the embodiment shown in FIG. 9 further includes step 901d, and step 901d may be performed after step 901a.

901d: The neighboring-cell network device sends the message 2 to the terminal device. Correspondingly, the terminal device receives the message 2 from the neighboring-cell network device.

In this implementation, the terminal device may wait for a response from the neighboring-cell network device for the message 1. Optionally, if the terminal device does not receive the message 2 from the neighboring-cell network device within a period of time or a preconfigured time window, the terminal device may perform any one of the following implementations.

In a possible implementation, the terminal device continues to use the first preamble in the message 1, that is, the terminal device retransmits the message 1. For example, the terminal device retransmits the message 1 based on the preconfigured power ramping parameter and/or the preconfigured quantity of retransmission times.

In another possible implementation, the terminal device reselects a second preamble, and then sends the second preamble to the neighboring-cell network device.

Optionally, the embodiment shown in FIG. 9 further includes step 904 and step 905. Step 904 and step 905 may be performed after step 903.

904: The serving network device sends a handover command to the terminal device. Correspondingly, the terminal device receives the handover command from the serving network device.

905: The terminal device determines at least one of the following: an uplink resource, an uplink transmit beam, uplink transmit power, or a TA of the target neighboring cell.

It should be noted that step 904 and step 905 are similar to step 608 and step 609 in the embodiment shown in FIG. 6. For details, refer to the related descriptions of step 608 and step 609 in the embodiment shown in FIG. 6.

In this embodiment of this application, the terminal device sends the message 3 to the neighboring-cell network device, where the message 3 is a message 3 used by the terminal device to initiate the random access to the target neighboring cell, and the message 3 includes the identifier of the terminal device. The terminal device receives the message 4 from the serving network device, where the message 4 indicates that the random access initiated by the terminal device to the target neighboring cell succeeds. Therefore, the terminal device does not need to wait for a response from the neighboring-cell network device for the message 3, but waits for a response from the serving network device for the message 3, thereby reducing a service interruption time of the terminal device in the serving cell. Further, the terminal device receives the message 4 from the serving network device, where the message 4 indicates that the random access initiated by the terminal device to the target neighboring cell succeeds. Therefore, the terminal device may determine, based on a feedback status of the serving network device, that the random access succeeds. Therefore, in the technical solution of this application, the terminal device can determine the access status of the random access while reducing the service interruption time of the terminal device in the serving cell.

It may be understood that, for terms and related technologies in embodiments, reference may be made to each other. However, it should be noted that definitions corresponding to technical terms with a same name in the foregoing different embodiments may be different, and specifically, the technical terms should be understood with reference to the embodiments in which the technical terms are located.

The following describes communication apparatuses provided in embodiments of this application.

FIG. 10 is a diagram of a structure of a communication apparatus according to an embodiment of this application. Refer to FIG. 10. The communication apparatus may be configured to perform processes performed by the terminal device in the embodiments shown in FIG. 6, FIG. 8, and FIG. 9. For details, refer to the related descriptions in the foregoing method embodiments.

The communication apparatus 1000 includes a transceiver module 1001. Optionally, the communication apparatus 1000 further includes a processing module 1002.

The processing module 1002 is configured to process data. The transceiver module 1001 may implement a corresponding communication function. The transceiver module 1001 may also be referred to as a communication interface or a communication module.

Optionally, the communication apparatus 1000 may further include a storage module. The storage module may be configured to store instructions and/or data. The processing module 1002 may read the instructions and/or the data in the storage module, so that the communication apparatus implements the foregoing method embodiments.

The communication apparatus module 1000 may be configured to perform actions performed by the terminal device in the foregoing method embodiments. The communication apparatus 1000 may be a terminal device or a component that may be configured in the terminal device. The processing module 1002 is configured to perform processing-related operations on the terminal device side in the foregoing method embodiments. The transceiver module 1001 is configured to perform receiving-related operations on the terminal device side in the foregoing method embodiments.

Optionally, the transceiver module 1001 may include a sending module and a receiving module. The sending module is configured to perform sending operations in the foregoing method embodiments. The receiving module is configured to perform receiving operations in the foregoing method embodiments.

It should be noted that the communication apparatus 1000 may include the sending module but not include the receiving module. Alternatively, the communication apparatus 1000 may include the receiving module but not include the sending module. This may be specifically determined depending on whether the foregoing solutions performed by the communication apparatus 1000 include sending actions and receiving actions.

Optionally, the communication apparatus 1000 is configured to perform actions performed by the terminal device in any one of the method embodiments in FIG. 6, FIG. 8, and FIG. 9.

For example, the communication apparatus 1000 is configured to perform the actions performed by the terminal device in the embodiment shown in FIG. 6.

The transceiver module 1001 is configured to send a random access request to a neighboring-cell network device, where the random access request is used to initiate random access to a target neighboring cell, and the target neighboring cell is a neighboring cell of a serving cell of the communication apparatus 1000; and retransmit the random access request to the neighboring-cell network device if the communication apparatus 1000 does not receive a feedback message from a serving network device for the random access request, or the communication apparatus 1000 receives at least one of the following from the serving network device: a first feedback message or first scheduling signaling, where the first feedback message indicates that the random access of the communication apparatus fails, and the first scheduling signaling is used to schedule the communication apparatus to retransmit the random access request.

For example, the communication apparatus 1000 is configured to perform the actions performed by the terminal device in the embodiment shown in FIG. 8.

The transceiver module 10001 is configured to: send a message A to a neighboring-cell network device, where the message A includes a preamble and uplink information, the preamble is used by the communication apparatus 1000 to initiate random access to a target neighboring cell, and the target neighboring cell is a neighboring cell of a serving cell of the communication apparatus 1000; and receive a first feedback message from a serving network device, where the first feedback message indicates that the random access initiated by the communication apparatus 1000 to the target neighboring cell succeeds, and the first feedback message further indicates a physical uplink control channel resource used by the communication apparatus 1000 to perform uplink communication with the target neighboring cell; or receive a second feedback message from the serving network device, where the second feedback message indicates only that the random access initiated by the communication apparatus 1000 to the target neighboring cell succeeds, or indicates that the communication apparatus 1000 successfully feeds back the preamble to the target neighboring cell.

For example, the communication apparatus 1000 is configured to perform the actions performed by the terminal device in the embodiment shown in FIG. 8.

The transceiver module 1001 is configured to: send a message 3 to a neighboring-cell network device, where the message 3 is a message 3 used by the communication apparatus 1000 to initiate random access to a target neighboring cell, the target neighboring cell is a neighboring cell of a serving cell of the communication apparatus 1000, and the message 3 includes an identifier of the communication apparatus 1000; and receive a message 4 from a serving network device, where the message 4 indicates that the random access initiated by the communication apparatus 1000 to the target neighboring cell succeeds.

It should be understood that specific processes in which the modules perform the foregoing corresponding processes have been described in detail in the foregoing method embodiments. For brevity, details are not described herein again.

The processing module 1002 in the foregoing embodiment may be implemented by at least one processor or processor-related circuit. The transceiver module 1001 may be implemented by a transceiver or a transceiver-related circuit. The transceiver module 1001 may also be referred to as a communication module or a communication interface. The storage module may be implemented by at least one memory.

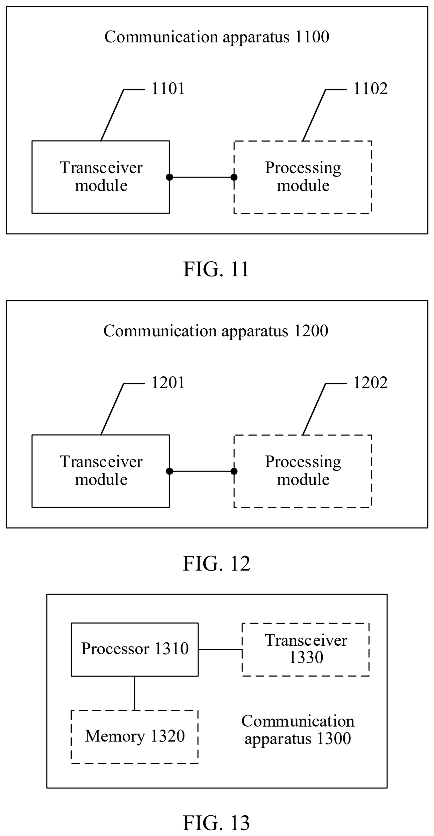

FIG. 11 is a diagram of another structure of a communication apparatus according to an embodiment of this application. Refer to FIG. 11. The communication apparatus may be configured to perform processes performed by the serving network device in the embodiments shown in FIG. 6, FIG. 8, and FIG. 9. For details, refer to the related descriptions in the foregoing method embodiments.

The communication apparatus 1100 includes a transceiver module 1101. Optionally, the communication apparatus 1100 further includes a processing module 1102. The transceiver module 1101 may implement a corresponding communication function. The processing module 1102 is configured to process data. The transceiver module 1101 may also be referred to as a communication interface or a communication module.

Optionally, the communication apparatus 1100 may further include a storage module. The storage module may be configured to store instructions and/or data. The processing module 1102 may read the instructions and/or the data in the storage module, so that the communication apparatus implements the foregoing method embodiments.

The communication apparatus module 1100 may be configured to perform actions performed by the serving network device in the foregoing method embodiments. The communication apparatus 1100 may be a serving network device or a component that may be configured in the serving network device. The transceiver module 1101 is configured to perform receiving-related operations on the serving network device side in the foregoing method embodiments, and the processing module 1102 is configured to perform processing-related operations on the serving network device side in the foregoing method embodiments.

Optionally, the transceiver module 1101 may include a sending module and a receiving module. The sending module is configured to perform sending operations in the foregoing method embodiments. The receiving module is configured to perform receiving operations in the foregoing method embodiments.

It should be noted that the communication apparatus 1100 may include the sending module but not include the receiving module. Alternatively, the communication apparatus 1100 may include the receiving module but not include the sending module. This may be specifically determined depending on whether the foregoing solutions performed by the communication apparatus 1100 include sending actions and receiving actions.

Optionally, the communication apparatus 1100 is configured to perform actions performed by the serving network device in the method embodiments in FIG. 6, FIG. 8, and FIG. 9.

For example, the communication apparatus 1100 is configured to perform the actions performed by the serving network device in the embodiment shown in FIG. 6.

The transceiver module 1101 is configured to: if the communication apparatus 1100 does not receive a feedback message from a neighboring-cell network device for a random access request of a terminal device, or the communication apparatus 1100 receives a third feedback message from the neighboring-cell network device and the third feedback message indicates that the neighboring-cell network device does not receive the random access request, send at least one of the following to the terminal device: a first feedback message or first scheduling signaling; or skip sending a feedback message to the terminal device, where
the first random access request is used by the terminal device to request to access a target neighboring cell, and the target neighboring cell is a neighboring cell of a serving cell of the terminal device; and the first feedback message indicates that random access of the terminal device fails, and the first scheduling signaling is used to schedule the terminal device to retransmit the random access request.

For example, the communication apparatus 1100 is configured to perform the actions performed by the serving network device in the embodiment shown in FIG. 8.

The transceiver module 1101 is configured to: send a first feedback message to a terminal device if the communication apparatus 1100 receives a successful random access response message from a neighboring-cell network device, where the first feedback message indicates that random access initiated by the terminal device to a target neighboring cell succeeds, the target neighboring cell is a neighboring cell of a serving cell of the terminal device, and the first feedback message further indicates a PUCCH resource used by the terminal device to perform uplink transmission with the target neighboring cell; or send a second feedback message to the terminal device if the communication apparatus 1100 receives a fallback random access response message from the neighboring-cell network device, where the second feedback message indicates only that random access initiated by the terminal device to the target neighboring cell succeeds, or indicates that the terminal device successfully feeds back a preamble to the target neighboring cell.

For example, the communication apparatus 1100 is configured to perform the actions performed by the serving network device in the embodiment shown in FIG. 9.

The transceiver module 1101 is configured to: receive a message 4 from a neighboring-cell network device, where the message 4 indicates that random access initiated by a terminal device to a target neighboring cell succeeds, and the target neighboring cell is a neighboring cell of a serving cell of the terminal device; and send the message 4 to the terminal device.

It should be understood that specific processes in which the modules perform the foregoing corresponding processes have been described in detail in the foregoing method embodiments. For brevity, details are not described herein again.

The processing module 1102 in the foregoing embodiment may be implemented by at least one processor or processor-related circuit. The transceiver module 1101 may be implemented by a transceiver or a transceiver-related circuit. The transceiver module 1101 may also be referred to as a communication module or a communication interface. The storage module may be implemented by at least one memory.

FIG. 12 is a diagram of still another structure of a communication apparatus according to an embodiment of this application. Refer to FIG. 12. The communication apparatus may be configured to perform processes performed by the neighboring-cell network device in the embodiments shown in FIG. 6, FIG. 8, and FIG. 9. For details, refer to the related descriptions in the foregoing method embodiments.

The communication apparatus 1200 includes a transceiver module 1201. Optionally, the communication apparatus 1200 further includes a processing module 1202. The transceiver module 1201 may implement a corresponding communication function. The processing module 1202 is configured to process data. The transceiver module 1201 may also be referred to as a communication interface or a communication module.

Optionally, the communication apparatus 1200 may further include a storage module. The storage module may be configured to store instructions and/or data. The processing module 1202 may read the instructions and/or the data in the storage module, so that the communication apparatus implements the foregoing method embodiments.

The communication apparatus module 1200 may be configured to perform actions performed by the neighboring-cell network device in the foregoing method embodiments. The communication apparatus 1200 may be a neighboring-cell network device or a component that may be configured in the neighboring-cell network device. The transceiver module 1201 is configured to perform receiving-related operations on the neighboring-cell network device side in the foregoing method embodiments, and the processing module 1202 is configured to perform processing-related operations on the neighboring-cell network device side in the foregoing method embodiments.

Optionally, the transceiver module 1201 may include a sending module and a receiving module. The sending module is configured to perform sending operations in the foregoing method embodiments. The receiving module is configured to perform receiving operations in the foregoing method embodiments.

It should be noted that the communication apparatus 1200 may include the sending module but not include the receiving module. Alternatively, the communication apparatus 1200 may include the receiving module but not include the sending module. This may be specifically determined depending on whether the foregoing solutions performed by the communication apparatus 1200 include sending actions and receiving actions.

Optionally, the communication apparatus 1200 is configured to perform actions performed by the neighboring-cell network device in the method embodiments in FIG. 6, FIG. 8, and FIG. 9.

For example, the communication apparatus 1200 is configured to perform the actions performed by the neighboring-cell network device in the embodiment shown in FIG. 6.

The transceiver module 1201 is configured to: if the communication apparatus 1200 does not receive a random access request from a terminal device, send a third feedback message to a serving network device, or skip sending a feedback message to the serving network device, where
the third feedback message indicates that the communication apparatus 1200 does not receive the random access request, the random access request is used by the terminal device to request to access a target neighboring cell, and the target neighboring cell is a neighboring cell of a serving cell of the terminal device.

For example, the communication apparatus 1200 is configured to perform the actions performed by the neighboring-cell network device in the embodiment shown in FIG. 8.

The transceiver module 1201 is configured to: send a successful random access response message to a serving network device if the communication apparatus 1200 successfully receives a message A sent by a terminal device, where the message A includes a preamble and uplink information of the terminal device, where the preamble is used by the terminal device to initiate random access to a target neighboring cell, and the target neighboring cell is a neighboring cell of a serving cell of the terminal device; or send a fallback random access response message to the serving network device if the communication apparatus 1200 successfully receives only the preamble in the message A of the terminal device.

For example, the communication apparatus 1200 is configured to perform the actions performed by the neighboring-cell network device in the embodiment shown in FIG. 9.

The transceiver module 1201 is configured to: receive a message 3 from a terminal device, where the message 3 is a message 3 used by the terminal device to initiate random access to a target neighboring cell, the target neighboring cell is a neighboring cell of a serving cell of the terminal device, and the message 3 includes an identifier of the terminal device; and send a message 4 to a serving network device, where the message 4 indicates that the random access initiated by the terminal device to the target neighboring cell succeeds.

It should be understood that specific processes in which the modules perform the foregoing corresponding processes have been described in detail in the foregoing method embodiments. For brevity, details are not described herein again.

The processing module 1202 in the foregoing embodiment may be implemented by at least one processor or processor-related circuit. The transceiver module 1201 may be implemented by a transceiver or a transceiver-related circuit. The transceiver module 1201 may also be referred to as a communication module or a communication interface. The storage module may be implemented by at least one memory.

An embodiment of this application further provides a communication apparatus 1300. Refer to FIG. 13. The communication apparatus 1300 includes a processor 1310. The processor 1310 is coupled to a memory 1320. The memory 1320 is configured to store a computer program or instructions and/or data. The processor 1310 is configured to execute the computer program or the instructions and/or the data stored in the memory 1320, so that the methods in the foregoing method embodiments is performed.

Optionally, the communication apparatus 1300 includes one or more processors 1310.

Optionally, as shown in FIG. 13, the communication apparatus 1300 may further include the memory 1320.

Optionally, the communication apparatus 1300 may include one or more memories 1320.

Optionally, the memory 1320 and the processor 1310 may be integrated, or disposed separately.

Optionally, as shown in FIG. 13, the communication apparatus 1300 may further include a transceiver 1330. The transceiver 1330 is configured to receive and/or send a signal. For example, the processor 1310 is configured to control the transceiver 1330 to receive a signal and/or send a signal.

In a solution, the communication apparatus 1300 is configured to implement operations performed by the terminal device in the foregoing method embodiments.

For example, the processor 1310 is configured to implement processing-related operations performed by the terminal device in the foregoing method embodiments, and the transceiver 1330 is configured to implement receiving/sending-related operations performed by the terminal device in the foregoing method embodiments.

In another solution, the communication apparatus 1300 is configured to implement operations performed by the neighboring-cell network device in the foregoing method embodiments.

For example, the processor 1310 is configured to implement processing-related operations performed by the neighboring-cell network device in the foregoing method embodiments, and the transceiver 1330 is configured to implement receiving/sending-related operations performed by the neighboring-cell network device in the foregoing method embodiments.

In still another solution, the communication apparatus 1300 is configured to implement operations performed by the serving network device in the foregoing method embodiments.

For example, the processor 1310 is configured to implement processing-related operations performed by the serving network device in the foregoing method embodiments, and the transceiver 1330 is configured to implement receiving/sending-related operations performed by the serving network device in the foregoing method embodiments.

This application further provides a communication apparatus 1400. The communication apparatus 1400 may be a terminal device, a processor of the terminal device, or a chip. The communication apparatus 1400 may be configured to perform operations performed by the terminal device in the foregoing method embodiments.

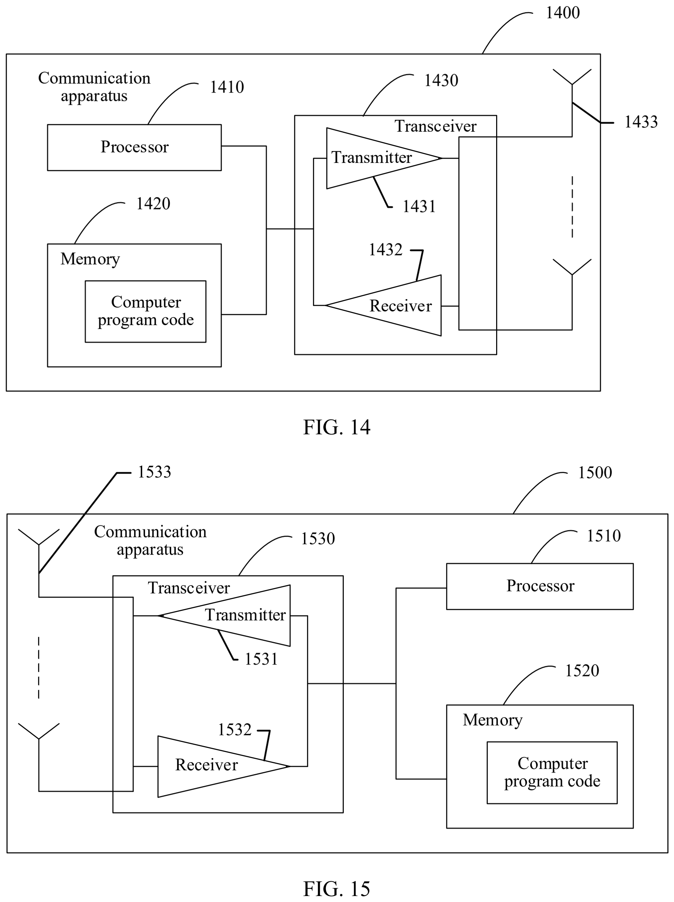

When the communication apparatus 1400 is a terminal device, FIG. 14 is a diagram of a simplified structure of the terminal device. As shown in FIG. 14, the terminal device includes a processor, a memory, and a transceiver. The memory may store computer program code. The transceiver includes a transmitter machine 1431, a receiver machine 1432, a radio frequency circuit (not shown in the figure), an antenna 1433, and an input/output apparatus (not shown in the figure).

The processor is mainly configured to: process a communication protocol and communication data, and control the terminal device to execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display screen, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 14 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have sending and receiving functions may be considered as a transceiver module of the terminal device, and the processor that has a processing function may be considered as a processing module of the terminal device.

As shown in FIG. 14, the terminal device includes a processor 1410, a memory 1420, and a transceiver 1430. The processor 1410 may also be referred to as a processing unit, a processing board, a processing module, a processing apparatus, or the like. The transceiver 1430 may also be referred to as a transceiver unit, a transceiver machine, a transceiver apparatus, or the like.

Optionally, a component that is in the transceiver 1430 and that is configured to implement a receiving function may be considered as a receiving module, and a component that is in the transceiver 1430 and that is configured to implement a sending function may be considered as a sending module. In other words, the transceiver 1430 includes a receiver and a transmitter. The transceiver may also be sometimes referred to as a transceiver machine, a transceiver module, a transceiver circuit, or the like. The receiver machine may also be sometimes referred to as a receiver, a receiving module, a receiver circuit, or the like. The transmitter machine may also be sometimes referred to as a transmitter, a transmitting module, a transmitter circuit, or the like.

The processor 1401 is configured to perform processing actions on the terminal device side in the embodiments shown in FIG. 6, FIG. 8, and FIG. 9, and the transceiver 1430 is configured to perform receiving and sending actions on the terminal device side in the embodiments shown in FIG. 6, FIG. 8, and FIG. 9.

It should be understood that FIG. 14 is merely an example rather than a limitation. The terminal device including the transceiver module and the processing module may not depend on the structure shown in FIG. 10 or FIG. 14.

When the communication apparatus 1400 is the chip, the chip includes a processor, a memory, and a transceiver. The transceiver may be an input/output circuit or a communication interface. The processor may be a processing module, a microprocessor, or an integrated circuit integrated on the chip. Sending operations performed by the terminal device in the foregoing method embodiments may be understood as an output of the chip, and receiving operations performed by the terminal device in the foregoing method embodiments may be understood as an input of the chip.

This application further provides a communication apparatus 1500. The communication apparatus 1500 may be a network device or a chip. The communication apparatus 1500 may be configured to perform operations performed by the neighboring-cell network device or the serving network device in the method embodiments in FIG. 6, FIG. 8, and FIG. 9.

When the communication apparatus 1500 is a network device, for example, a base station, FIG. 15 is a diagram of a simplified structure of the base station. The base station includes a part 1510, a part 1520, and a part 1530. The part 1510 is mainly configured to perform baseband processing, control the base station, and the like. The part 1510 is usually a control center of the base station, may be usually referred to as a processor, and is configured to control the base station to perform processing operations on the network device side in the foregoing method embodiments. The part 1520 is mainly configured to store computer program code and data. The part 1530 is mainly configured to receive and send a radio frequency signal, and perform conversion between the radio frequency signal and a baseband signal. The part 1530 may be usually referred to as a transceiver module, a transceiver machine, a transceiver circuit, a transceiver, or the like. A transceiver module in the part 1530 may also be referred to as a transceiver machine, a transceiver, or the like, and includes an antenna 1533 and a radio frequency circuit (not shown in the figure). The radio frequency circuit is mainly configured to perform radio frequency processing. Optionally, a component configured to implement a receiving function in the part 1530 may be considered as a receiver, and a component configured to implement a sending function may be considered as a transmitter. In other words, the part 1530 includes a receiver 1532 and a transmitter 1531. The receiver may also be referred to as a receiving module, a receiver machine, a receiver circuit, or the like, and the transmitter may be referred to as a transmitting module, a transmitter machine, a transmitter circuit, or the like.

The part 1510 and the part 1520 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module in the part 1530 is configured to perform receiving/sending-related processes performed by the neighboring-cell network device or the serving network device in the embodiments shown in FIG. 6, FIG. 8, and FIG. 9. The processor in the part 1510 is configured to perform processing-related processes performed by the neighboring-cell network device or the serving network device in the embodiments shown in FIG. 6, FIG. 8, and FIG. 9.

It should be understood that FIG. 15 is merely an example rather than a limitation, and the network device including the processor, the memory, and the transceiver may not depend on the structure shown in FIG. 11, FIG. 12, or FIG. 15.

When the communication apparatus 1500 is a chip, the chip includes a transceiver, a memory, and a processor. The transceiver may be an input/output circuit or a communication interface. The processor is a processor, a microprocessor, or an integrated circuit integrated on the chip. Sending operations performed by the network device in the foregoing method embodiments may be understood as an output of the chip, and receiving operations performed by the neighboring-cell network device or the serving network device in the foregoing method embodiments may be understood as an input of the chip.

An embodiment of this application further provides a computer-readable storage medium. The computer-readable storage medium stores computer instructions used to implement the method performed by the terminal device, the neighboring-cell network device, or the serving network device in the foregoing method embodiments.

For example, when the computer program is executed by a computer, the computer is enabled to implement the method performed by the terminal device, the neighboring-cell network device, or the serving network device in the foregoing method embodiments.

An embodiment of this application further provides a computer program product including instructions. When the instructions are executed by a computer, the computer is enabled to implement the method performed by the terminal device, the neighboring-cell network device, or the serving network device in the foregoing method embodiments.

An embodiment of this application further provides a communication system. The communication system includes the terminal device in the foregoing embodiments, the neighboring-cell network device in the foregoing embodiments, and the serving network device in the foregoing embodiments.

An embodiment of this application further provides a chip apparatus, including a processor, configured to invoke a computer program or computer instructions stored in a memory, so that the processor performs the methods in the embodiments shown in FIG. 6, FIG. 8, and FIG. 9.

In a possible implementation, an input of the chip apparatus corresponds to a receiving operation in any one of the embodiments shown in FIG. 6, FIG. 8, and FIG. 9, and an output of the chip apparatus corresponds to a sending operation in any one of the embodiments shown in FIG. 6, FIG. 8, and FIG. 9.

Optionally, the processor is coupled to the memory through an interface.

Optionally, the chip apparatus further includes the memory, and the memory stores the computer program or the computer instructions.

The processor mentioned above may be a general-purpose central processing unit, a microprocessor, an application-specific integrated circuit (application-specific integrated circuit, ASIC), or one or more integrated circuits configured to control program execution of the method provided in any one of the embodiments shown in FIG. 6, FIG. 8, and FIG. 9. The memory mentioned in any one of the foregoing may be a read-only memory (read-only memory, ROM), another type of static storage device that can store static information and instructions, a random access memory (random access memory, RAM), or the like.

It can be clearly understood by a person skilled in the art that, for convenient and brief description, for explanations and beneficial effects of related content in any one of the communication apparatuses provided above, refer to the corresponding method embodiments provided above. Details are not described herein again.

In this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the apparatus embodiments described above are merely examples. For example, division of modules is merely logical function division. In an actual implementation, there may be another division manner. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of embodiments.

In addition, functional modules in embodiments of this application may be integrated into one processing module, or each of the modules may exist alone physically, or two or more modules are integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, a part that essentially contributes to the technical solutions of this application or all or some of the technical solutions may be implemented in a form of a software product. The computer software product is stored in a storage medium, and includes several instructions for enabling a computer device (which may be a personal computer, a server, a network device, or the like) to perform all or some processes of the methods in embodiments of this application. The foregoing storage medium includes any medium that can store program code, such as a USB flash disk, a removable hard disk, a read-only memory, a random access memory, a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, wherein the method comprises:
sending, by a terminal device, a random access request to a candidate network device, wherein the random access request is used to initiate random access to a candidate cell; and
retransmitting, by the terminal device, the random access request to the candidate network device if the terminal device does not receive a feedback message from a serving network device for the random access request, or the terminal device receives at least one of the following from the serving network device: a first feedback message or first scheduling signaling, wherein the first feedback message indicates that the random access of the terminal device fails, and the first scheduling signaling is used to schedule the terminal device to retransmit the random access request.

2. The method according to claim 1, wherein the method further comprises:
determining, by the terminal device, that the random access of the terminal device succeeds if the terminal device receives at least one of the following from the serving network device: a second feedback message or first indication information, wherein the second feedback message indicates that the candidate network device successfully receives the random access request, and the first indication information indicates the terminal device not to retransmit the random access request to the candidate network device.

3. The method according to claim 2, wherein the second feedback message further comprises at least one of the following: an uplink timing advance of the candidate cell, an identifier allocated by the candidate cell to the terminal device, or an uplink resource allocated by the candidate cell to the terminal device.

4. The method according to claim 1, wherein retransmitting, by the terminal device, the random access request to the candidate network device comprises:
retransmitting, by the terminal device, the random access request to the candidate network device based on a preconfigured quantity of retransmission times and/or a preconfigured power ramping parameter.

5. The method according to claim 1, wherein the first feedback message or the first scheduling signaling further comprises a power ramping parameter; and
retransmitting, by the terminal device, the random access request to the candidate network device comprises:
retransmitting, by the terminal device, the random access request to the candidate network device based on the power ramping parameter.

6. The method according to any one of claims 1 to 5, wherein the method further comprises:
receiving, by the terminal device, a handover command from the serving network device, wherein the handover command indicates the terminal device to hand over to the candidate cell.

7. The method according to claim 6, wherein after receiving, by the terminal device, the handover command from the serving network device, the method further comprises:
determining, by the terminal device, at least one of the following: an uplink resource, an uplink transmit beam, uplink transmit power, or an uplink timing advance of the candidate cell, wherein
the uplink resource is used by the terminal device to communicate with the candidate cell, the uplink transmit beam is a beam used by the terminal device to perform uplink sending with the candidate cell, the uplink transmit power is power used by the terminal device to perform uplink sending with the candidate cell, and the uplink timing advance of the candidate cell is a timing advance used by the terminal device to send an uplink signal to the candidate cell.

8. The method according to claim 7, wherein determining, by the terminal device, the uplink resource comprises:
using, by the terminal device, a preconfigured dedicated physical uplink control channel PUCCH resource or a preconfigured configured grant physical uplink shared channel PUSCH resource as the uplink resource; or
determining, by the terminal device, the uplink resource by using a handover command, wherein the handover command comprises the uplink resource; or
monitoring, by the terminal device on a preconfigured time-frequency resource, second scheduling signaling sent by the candidate network device, wherein the second scheduling signaling indicates the uplink resource.

9. The method according to claim 8, wherein before monitoring, by the terminal device on the preconfigured time-frequency resource, the second scheduling signaling sent by the candidate network device, the method further comprises:
determining, by the terminal device, the preconfigured time-frequency resource based on a search space and a control resource set, wherein the search space and the control resource set are configured by the candidate network device for the terminal device for cell handover of the terminal device, or the search space and the control resource set are configured by the serving network device for the terminal device.

10. The method according to claim 8, wherein the method further comprises:
sending, by the terminal device, indication information to the candidate network device by using the uplink resource, wherein the indication information indicates that the terminal device has handed over to the candidate network device.

11. The method according to claim 7 or 8, wherein determining, by the terminal device, the uplink transmit power comprises:
determining, by the terminal device, a path loss between the candidate network device and the terminal device based on a first path loss reference signal, and determining, by the terminal device, the uplink transmit power based on the path loss; or
using, by the terminal device, transmit power for sending the random access request by the terminal device as the first transmit power.

12. The method according to claim 8, wherein if the handover command further comprises an activated transmission configuration indicator TCI state of the candidate cell, the first path loss reference signal is a path loss reference signal associated with the activated TCI state; or
if the handover command further comprises a deactivated TCI state of the candidate cell, the first path loss reference signal is a synchronization signal and physical broadcast channel block SSB associated with a random access resource used by the terminal device to send the random access request; or
if the handover command further comprises a reference signal of the candidate cell, the first path loss reference signal is the reference signal of the candidate cell.

13. The method according to any one of claims 8 to 12, wherein the handover command further comprises a power control parameter associated with the activated TCI state of the candidate cell or a power control parameter associated with the deactivated TCI state of the candidate cell; and determining, by the terminal device, the uplink transmit power based on the path loss comprises:
determining, by the terminal device, the uplink transmit power based on the path loss and the power control parameter.

14. The method according to claim 7, wherein determining, by the terminal device, the uplink timing advance of the candidate cell comprises:
if the handover command comprises an uplink timing advance of the candidate cell, using, by the terminal device, the uplink timing advance in the handover command as the uplink timing advance of the candidate cell; or
if the handover command does not comprise an uplink timing advance of the candidate cell, considering, by the terminal device by default, that the uplink timing advance of the candidate cell is equal to 0; or
if the handover command does not comprise an uplink timing advance of the candidate cell, using, by the terminal device, the uplink timing advance carried in the second feedback message as the uplink timing advance of the candidate cell; or
if the handover command comprises an uplink timing advance indication, and the uplink timing advance indication indicates the terminal device to determine an uplink timing advance of the candidate cell, using, by the terminal device, the uplink timing advance of the candidate cell determined by the terminal device as the uplink timing advance of the candidate cell.

15. The method according to claim 7, wherein determining, by the terminal device, the uplink transmit beam comprises:
if the handover command comprises a TCI state indicated by the candidate network device for the terminal device, determining, by the terminal device, the uplink transmit beam based on the TCI state indicated in the handover command; or
if a TCI state indicated in the handover command is a downlink TCI state, determining, by the terminal device, the uplink transmit beam based on a receive beam of an SSB associated with a random access resource used to send the random access request.

16. The method according to any one of claims 1 to 15, wherein the first scheduling signaling comprises second indication information, and the second indication information indicates the terminal device to retransmit the random access request.

17. The method according to any one of claims 1 to 16, wherein the first scheduling signaling further comprises at least one of the following: third indication information or a power ramping parameter, wherein
the third indication information indicates the terminal device whether to increase power for sending the random access request, and the power ramping parameter comprises a power ramping value or a power ramping step.

18. The method according to any one of claims 1 to 17, wherein the method further comprises:
receiving, by the terminal device, fourth indication information from the serving network device, wherein the fourth indication information indicates the terminal device not to wait for a feedback message from the candidate network device for the random access request; and
continuing, by the terminal device, to communicate with the serving network device without waiting for the feedback message from the candidate network device for the random access request.

19. The method according to any one of claims 1 to 18, wherein before sending, by the terminal device, the random access request to the candidate network device, the method further comprises:
receiving, by the terminal device, downlink control information DCI from the serving network device, wherein the DCI indicates the terminal device to send the random access request to the candidate network device, and the DCI further indicates the terminal device to receive the feedback message from the serving network device for the random access request.

20. The method according to any one of claims 1 to 18, wherein before sending, by the terminal device, the random access request to the candidate network device, the method further comprises:
receiving, by the terminal device, third scheduling signaling from the serving network device, wherein the third scheduling signaling is used to schedule the terminal device to initiate the random access request to the candidate cell.

21. The method according to claim 20, wherein the first scheduling signaling comprises first resource configuration information, the third scheduling signaling comprises second resource configuration information, the first resource configuration information is different from the second resource configuration information, the third scheduling signaling is carried in DCI, the DCI indicates a PRACH resource, and the DCI is used by the terminal device to initially transmit the random access request.

22. The method according to claim 20, wherein the third scheduling signaling is carried in DCI, and the DCI comprises a first field; and
if a value of the first field is a first value, the DCI indicates that there is a feedback message for the random access request of the terminal device, and the terminal device waits for the feedback message; or
if a value of the first field is a second value, the DCI indicates that there is no feedback message for the random access request of the terminal device, and the terminal device does not need to wait for the feedback message.

23. A communication method, wherein the method comprises:
if a candidate network device does not receive a random access request from a terminal device, sending, by the candidate network device, a third feedback message to a serving network device, or skipping, by the candidate network device, sending a feedback message to the serving network device, wherein the third feedback message indicates that the candidate network device does not receive the random access request, and the random access request is used by the terminal device to request to access a candidate cell; and
correspondingly, sending, by the serving network device, at least one of the following to the terminal device: a first feedback message or first scheduling signaling; or skipping, by the serving network device, sending a feedback message to the terminal device, wherein the first feedback message indicates that random access of the terminal device fails, and the first scheduling signaling is used to schedule the terminal device to retransmit the random access request.

24. The method according to claim 23, wherein the method further comprises:
if the candidate network device receives a random access request from the terminal device, sending, by the candidate network device, a fourth feedback message to the serving network device, wherein the fourth feedback message indicates that the candidate network device successfully receives the random access request; and
correspondingly, sending, by the serving network device, at least one of the following to the terminal device: a second feedback message or first indication information; or skipping, by the serving network device, sending a feedback message to the terminal device, wherein the second feedback message indicates that random access of the terminal device succeeds, and the first indication information indicates the terminal device not to retransmit the random access request to the candidate network device.

25. A communication apparatus, wherein the communication apparatus comprises a transceiver module, wherein
the transceiver module is configured to perform receiving and sending operations in the method according to any one of claims 1 to 22; or
the transceiver module is configured to perform receiving and sending operations in the method according to claim 23 or 24.

26. The communication apparatus according to claim 25, wherein the communication apparatus further comprises a processing module, and if the transceiver module is configured to perform the receiving and sending operations in the method according to any one of claims 1 to 22, the processing module is configured to perform processing operations according to any one of claims 1 to 22.

27. A communication apparatus, wherein the communication apparatus comprises:
a memory, configured to store computer instructions; and
a processor, configured to execute a computer program or the computer instructions stored in the memory, to enable the communication apparatus to perform the method according to any one of claims 1 to 22 or the method according to claim 23 or 24.

28. A communication apparatus, wherein the communication apparatus comprises a processor, and the processor is configured to perform the method according to any one of claims 1 to 22 or the method according to claim 23 or 24.

29. A computer-readable storage medium, wherein the computer-readable storage medium stores a computer program, and when the computer program is executed by a communication apparatus, the communication apparatus is enabled to perform the method according to any one of claims 1 to 22.
